# EUROPÄISCHE PATENTSCHRIFT

(11) **EP 2 220 397 B1**
(45) Veröffentlichungstag und Bekanntmachung des Hinweises auf die Patenterteilung: **14.11.2012**
(21) Anmeldenummer: 08863068.6
(22) Anmeldetag: 08.12.2008
(51) Int. Cl.: F16H 3/66

(54) **10-GANG-AUTOMATGETRIEBE**
10-GEAR AUTOMATIC TRANSMISSION
TRANSMISSION AUTOMATIQUE À DIX VITESSES

(30) Priorität: 14.12.2007 DE 102007055808
(43) Veröffentlichungstag der Anmeldung: 25.08.2010
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); BREHMER, Martin, 88069 Tettnang (DE)
(86) Internationale Anmeldenummer: PCT/EP2008/066975
(87) Internationale Veröffentlichungsnummer: WO 2009/077363

(56) Entgegenhaltungen:
- WO-A-02/079669
- WO-A-2006/074707
- DE-A1-102005 032 881

## Beschreibung

Die vorliegende Erfindung betrifft ein 10-Gang-Automatgetriebe in Planetenbauweise, insbesondere für ein Kraftfahrzeug, gemäß dem Oberbegriff des Patentanspruchs 1.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in PKW als auch NKW geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Ein derartiges Mehrgang-Automatgetriebe geht beispielsweise aus der WO 2006/074707 A1 der Anmelderin hervor. Es umfasst im Wesentlichen eine Antriebswelle und eine Abtriebswelle, die koaxial zueinander angeordnet sind, insgesamt vier Einzel-Planetenradsätze und fünf Reibschaltelemente. Durch selektives Sperren von jeweils drei der fünf als Kupplungen und Bremsen ausgeführten Reibschaltelemente sind insgesamt acht Vorwärtsgänge gruppenschaltungsfrei schaltbar, also derart schaltbar, dass bei einem Wechsel von einem Gang in den nachfolgend höheren oder niedrigeren Gang jeweils nur eines der zuvor geschlossenen Schaltelemente geöffnet und ein zuvor offenes Schaltelement geschlossen wird.

Aus der gattungsbilden DE 10 2005 032881 A1 der Anmelderin ist ein weiteres Mehrgang-Automatgetriebe bekannt, umfassend eine Antriebswelle, eine Antriebswelle, vier Planetenradsätze und sechs Schaltelemente. Durch selektives Eingreifen von jeweils vier der sechs Schaltelemente sind insgesamt zehn Vorwärtsgänge gruppenschaltungsfrei schaltbar.

Der vorliegenden Erfindung liegt die Aufgabe zugrunde, ein Mehrstufengetriebe der eingangs genannten Art mit zumindest zehn gruppenschaltungsfrei schaltbaren Vorwärtsgängen und zumindest einem Rückwärtsgang vorzuschlagen, bei dem unter Verwendung von insgesamt vier Planetenradsätzen eine möglichst geringe Anzahl an Schaltelementen benötigt wird. Zudem soll das Getriebe eine große Spreizung bei hinsichtlich der Fahrbarkeit akzeptabler Gangabstufung und in den Hauptfahrgängen einen günstigen Wirkungsgrad - also vergleichsweise geringe Schlepp- und Verzahnungsverluste - aufweisen.

Diese Aufgabe wird erfindungsgemäß durch ein Automatgetriebe mit den Merkmalen des Patentanspruchs 1 gelöst. Weitere vorteilhafte Ausgestaltungen und Weiterbildungen gehen aus den Unteransprüchen hervor.

Demnach wird ein erfindungsgemäßes Automatgetriebe in Planetenbauweise vorgeschlagen, welches eine Antriebswelle, eine Abtriebswelle, vier Planetenradsätze und nur sechs Schaltelemente - zwei Bremsen und vier Kupplungen - aufweist, deren selektives Eingreifen verschiedene Übersetzungsverhältnisse zwischen Antriebswelle und Abtriebswelle bewirkt, so dass zehn Vorwärtsgänge und mindestens ein Rückwärtsgang realisierbar sind. Dabei sind in jedem Gang drei der insgesamt sechs Schaltelemente geschlossen. Bei einem Wechsel von einem Gang in den nachfolgend höheren oder niedrigeren Gang wird jeweils nur eines der zuvor geschlossenen Schaltelemente geöffnet und ein zuvor offenes Schaltelement geschlossen.

Erfindungsgemäß ist die Abtriebswelle des Getriebes ständig mit einem Element eines der vier Planetenradsätze und ständig mit dem Ausgangselement eines der sechs Schaltelemente des Getriebes verbunden und über dieses eine Schaltelement mit dem Ausgangselement eines anderen der sechs Schaltelemente verbindbar, wobei dieses andere ausgangsseitig mit der Abtriebswelle verbindbare Schaltelement eingangseitig ständig mit einem anderen Element dieses ständig mit der Abtriebswelle verbundenen Planetenradsatzes verbunden ist.

In einer vorteilhaften Ausgestaltung ist das sechste Schaltelement zur Realisierung eines getriebeseitigen Hillholders geeignet, durch den die Abtriebswelle mittels gleichzeitig geschlossener Schaltelemente getriebeseitig festsetzbar ist.

In einer bevorzugten Ausführung weist das erfindungsgemäße Automatgetriebe folgende kinematischen Kopplungen der Radsatzelemente untereinander und zur Antriebs- und Abriebswelle auf:
■ der vierte Planetenradsatz ist ständig mit der Antriebswelle verbunden, über je eine Wirkverbindung ständig mit dem ersten und zweiten Planetenradsatz verbunden und über das erste Schaltelement mit einem Gehäuse des Getriebes verbindbar,
■ der dritte Planetenradsatz ist ständig mit der Abtriebswelle verbunden, über je eine Wirkverbindung ständig mit dem ersten und zweiten Planetenradsatz verbunden, über das dritte Schaltelement mit der Antriebswelle verbindbar und über das vierte Schaltelement mit dem zweiten Planetenradsatz verbindbar,
■ der zweite Planetenradsatz ist über das fünfte Schaltelement blockierbar und über das sechste Schaltelement mit dem ersten und dritten Planetenradsatz verbindbar,
■ der erste Planetenradsatz ist über das erste Schaltelement und über das zweite Schaltelement mit dem Gehäuse verbindbar.
Durch diese verschiedenen kinematischen Kopplungen der Schaltelemente an die verschiedenen Wellen des Automatgetriebes ergibt sich erfindungsgemäß somit eine ganze Getriebefamilie.

Mehrere vorteilhafte Ausgestaltungen eines derartigen erfindungsgemäßen Automatgetriebes basieren auf den aus der WO 2006/074707 A1 bekannten 8-Gang-Automatgetrieben mit folgenden kinematischen Kopplungen der Radsatzelemente untereinander: Ein Steg des vierten Planetenradsatzes und die Antriebswelle sind verdrehfest miteinander verbunden und bilden die erste drehbare Welle des Getriebes. Ein Steg des dritten Planetenradsatzes und die Abtriebswelle sind verdrehfest miteinander verbunden und bilden die zweite drehbare Welle des Getriebes. Ein Sonnenrad des ersten Planetenradsatzes und ein Sonnenrad des vierten Planetenradsatzes sind verdrehfest miteinander verbunden und bilden die dritte drehbare Welle des Getriebes. Ein Hohlrad des ersten Planetenradsatzes bildet die vierte drehbare Welle des Getriebes. Ein Hohlrad des zweiten Planetenradsatzes und ein Sonnenrad des dritten Planetenradsatzes sind verdrehfest miteinander verbunden und bilden die fünfte drehbare Welle des Getriebes. Ein Steg des ersten Planetenradsatzes und ein Hohlrad des dritten Planetenradsatzes sind verdrehfest miteinander verbunden und bilden die sechste drehbare Welle des Getriebes. Ein Sonnenrad des zweiten Planetenradsatzes und ein Hohlrad des vierten Planetenradsatzes sind verdrehfest miteinander verbunden und bilden die siebte drehbare Welle des Getriebes. Ein Steg des zweiten Planetenradsatzes bildet die achte drehbare Welle des Getriebes. Diese Radsatz-Kinematik ist identisch zur Radsatz-Kinematik der aus der WO 2006/074707 A1 bekannten 8-Gang-Automatgetrieben.

Hinsichtlich der Anbindung der sechs Schaltelemente an die verschiedenen Elemente der Planetenradsätze und an die Antriebswelle dieser bevorzugten Ausführung eines erfindungsgemäßen Automatgetriebes ist vorgesehen, dass das erste Schaltelement im Kraftfluss zwischen der dritten Welle und einem Gehäuse des Getriebes angeordnet ist, dass das zweite Schaltelement im Kraftfluss zwischen der vierten Welle und dem Gehäuse des Getriebes angeordnet ist und dass das dritte Schaltelement im Kraftfluss zwischen der fünften und der ersten Welle angeordnet ist. Weiterhin ist vorgesehen, dass das vierte Schaltelement im Kraftfluss zwischen der achten und der zweiten Welle angeordnet ist, und dass das fünfte Schaltelement im Kraftfluss entweder zwischen der siebten und der fünften Welle oder aber zwischen der siebten und der achten Welle oder aber zwischen der fünften und der achten Welle angeordnet ist. Das gegenüber der WO 2006/074707 A1 erfindungsgemäß zusätzliche sechste Schaltelement ist im Kraftfluss zwischen der sechsten und der achten Welle angeordnet. Durch die verschiedenen kinematischen Kopplungen des fünften Schaltelementes an die verschiedenen Wellen des Automatgetriebes ergibt sich also auch hier eine Getriebefamilie.

Die Schaltlogik bzw. Ganglogik dieser vorteilhaften erfindungsgemäßen Automatgetriebe-Familie lautet wie folgt: Im ersten Vorwärtsgang sind das erste, zweite und dritte Schaltelement geschlossen bzw. drehmomentübertragend. Im zweiten Vorwärtsgang sind das erste, zweite und fünfte Schaltelement geschlossen bzw. drehmomentübertragend. Im dritten Vorwärtsgang sind das zweite, dritte und fünfte Schaltelement geschlossen bzw. drehmomentübertragend. Im vierten Vorwärtsgang sind das zweite, vierte und fünfte Schaltelement geschlossen bzw. drehmomentübertragend. Im fünften Vorwärtsgang sind das zweite, dritte und vierte Schaltelement geschlossen bzw. drehmomentübertragend. Im sechsten Vorwärtsgang sind das zweite, dritte und sechste Schaltelement geschlossen bzw. drehmomentübertragend. Im siebten Vorwärtsgang sind das dritte, fünfte und sechste Schaltelement geschlossen bzw. drehmomentübertragend. Im achten Vorwärtsgang sind das erste, dritte und sechste Schaltelement geschlossen bzw. drehmomentübertragend. Im neunten Vorwärtsgang sind das erste, dritte und vierte Schaltelement geschlossen bzw. drehmomentübertragend. Im zehnten Vorwärtsgang sind das erste, vierte und fünfte Schaltelement geschlossen bzw. drehmomentübertragend. Ein Rückwärtsgang ergibt sich durch Schließen des ersten, zweiten und vierten Schaltelementes oder durch Schließen des ersten, zweiten und sechsten Schaltelementes.

Im Unterschied zu den aus der WO 2006/074707 A1 bekannten 8-Gang-Automatgetrieben verfügt die genannte erfindungsgemäße Automatgetriebe-Familie durch das gegenüber der WO 2006/074707 A1 zusätzliche sechste Schaltelement nunmehr über einen getriebeseitigen Hillholder: Sind das erste, zweite, vierte und sechste Schaltelement gleichzeitig geschlossen, so ist die Abtriebswelle des Automatgetriebes gegen das Getriebegehäuse festgesetzt bzw. blockiert.

Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen. Hinsichtlich der räumlichen Anordnung der vier Planetenradsätze im Gehäuse des Automatgetriebes wird in einer Ausgestaltung vorgeschlagen, alle vier Planetenradsätze koaxial zueinander nebeneinander in der definierten Reihenfolge "erster, vierter, zweiter, dritter Planetenradsatz" anzuordnen, wodurch es möglich ist, dass alle vier Planetenradsätze jeweils höchstens von einer Welle des Getriebes zentrisch durchgriffen werden. Für eine Anwendung mit koaxial zueinander verlaufender Antriebs- und Abtriebswelle ist es in diesem Fall zweckmäßig, dass der erste Planetenradsatz der dem Antrieb des Automatgetriebes zugewandte Planetenradsatz der Planetenradsatzgruppe ist. In einer anderen Ausgestaltung wird hinsichtlich der räumlichen Anordnung der vier Planetenradsätze im Gehäuse des Automatgetriebes vorgeschlagen, alle vier Planetenradsätze koaxial zueinander nebeneinander in der definierten Reihenfolge "zweiter, vierter, erster, dritter Planetenradsatz" anzuordnen. Ein kompakter Getriebeaufbau ergibt sich für diese Ausgestaltung insbesondere dann, wenn das vierte und sechste Schaltelement räumlich gesehen in einem Bereich axial zwischen dem ersten und dritten Planetenradsatz angeordnet sind. Für eine Anwendung mit koaxial zueinander verlaufender Antriebs- und Abtriebswelle ist es in diesem Fall zweckmäßig, dass der zweite Planetenradsatz der dem Antrieb des Automatgetriebes zugewandte Planetenradsatz der Planetenradsatzgruppe ist.

Alle vorgeschlagenen Ausführungen und Ausgestaltungen für ein 10-Gang-Automatgetriebe gemäß der Erfindung weisen insbesondere für Personenkraftwagen günstige Übersetzungen mit sehr großer Gesamtspreizung in hinsichtlich der Fahrbarkeit vertretbarer Gangabstufung auf, wodurch eine signifikante Verbrauchsabsenkung erzielt wird. Darüber hinaus zeichnet sich das erfindungsgemäße 10-Gang-Automatgetriebe durch eine gemessen an der Gangzahl außerordentlich geringe Anzahl an Schaltelementen - nämlich zwei Bremsen und vier Kupplungen - und einen vergleichsweise geringen Bauaufwand aus. Weiterhin ergibt sich bei dem erfindungsgemäßen 10-Gang-Automatgetriebe in allen Gängen ein guter Wirkungsgrad, einerseits infolge geringer Schleppverluste, da in jedem Gang jeweils stets drei der sechs Schaltelemente im Eingriff sind, andererseits auch infolge geringer Verzahnungsverluste in den einfach aufgebauten Einzel-Planetenradsätzen.

In vorteilhafter Weise ist es mit dem erfindungsgemäßen 10-Gang-Automatgetriebe möglich, ein Anfahren des Kraftfahrzeugs sowohl mit einem getriebeexternen Anfahrelement als auch mit einem getriebeinternen Reibschaltelement zu realisieren. Ein getriebeexternes Anfahrelement kann in an sich bekannter Weise beispielsweise als hydrodynamischer Wandler, als so genannte trockene Anfahrkupplung, als so genannte nasse Anfahrkupplung, als Magnetpulverkupplung oder als Fliehkraftkupplung ausgebildet sein. Alternativ zur Anordnung eines derartigen Anfahrelement in Kraftflussrichtung zwischen Antriebsmotor und Getriebe kann das getriebeexterne Anfahrelement in Kraftflussrichtung auch hinter dem Getriebe angeordnet sein, wobei in diesem Fall die Antriebswelle des Getriebes ständig verdrehfest oder verdrehelastisch mit der Kurbelwelle des Antriebsmotors verbunden ist. Als getriebeinternes Anfahrelement eignet sich insbesondere eine der beiden Bremsen, die im ersten und zweiten Vorwärtsgang und im Rückwärtsgang betätigt wird.

Außerdem ist das erfindungsgemäße 10-Gang-Automatgetriebe derart konzipiert, dass eine Anpassbarkeit an unterschiedliche Triebstrangausgestaltungen sowohl in Kraftflussrichtung als auch in räumlicher Hinsicht ermöglicht wird. So können sich bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird. Weiterhin ist es ohne besondere konstruktive Maßnahmen möglich, Antrieb und Abtrieb des Getriebes wahlweise koaxial oder achsparallel zueinander anzuordnen. Auf der Antriebsseite oder auf der Abtriebsseite des Getriebes können ein Achsdifferential und/oder ein Verteilerdifferential angeordnet werden. Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden. Auch kann auf jeder Welle, bevorzugt auf der Antriebswelle oder auf der Abtriebswelle, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Auch kann zum Antrieb von zusätzlichen Aggregaten auf jeder Welle, bevorzugt auf der Antriebswelle oder der Abtriebswelle, ein Nebenabtrieb vorgesehen sein. Ein weiterer Vorteil des erfindungsgemäßen Automatgetriebes besteht darin, dass an jeder Welle zusätzlich eine elektrische Maschine als Generator und/oder als zusätzliche Antriebsmaschine anbringbar ist.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Als Schaltelemente können aber auch formschlüssige Bremsen und/oder Kupplungen, wie z.B. Synchronisierungen oder Klauenkupplungen eingesetzt werden.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungsbeispiels eines erfindungsgemäßen 10-Gang-Automatgetriebes;
- Figur 2: ein beispielhaftes Schaltschema für das Getriebe gemäß Figur 1;
- Figur 3: eine beispielhafte erste Bauteilanordnungs-Variante in schematischer Darstellung für das Getriebe gemäß Figur 1;
- Figur 4: eine beispielhafte zweite Bauteilanordnungs-Variante für das Getriebe gemäß Figur 1;
- Figur 5: eine beispielhafte dritte Bauteilanordnungs-Variante für das Getriebe gemäß Figur 1;
- Figur 6: eine beispielhafte vierte Bauteilanordnungs-Variante für das Getriebe gemäß Figur 1;
- Figur 7: eine beispielhafte fünfte Bauteilanordnungs-Variante für das Getriebe gemäß Figur 1;
- Figur 8: eine beispielhafte sechste Bauteilanordnungs-Variante für das Getriebe gemäß Figur 1;
- Figur 9: eine beispielhafte siebte Bauteilanordnungs-Variante für das Getriebe gemäß Figur 1;
- Figur 10: eine beispielhafte achte Bauteilanordnungs-Variante für das Getriebe gemäß Figur 1;
- Figur 11: eine beispielhafte neunte Bauteilanordnungs-Variante für das Getriebe gemäß Figur 1;
- Figur 12: eine beispielhafte zehnte Bauteilanordnungs-Variante in schematischer Darstellung für das Getriebe gemäß Figur 1;
- Figur 13: eine schematische Darstellung eines zweiten Ausführungsbeispiels eines erfindungsgemäßen 10-Gang-Automatgetriebes; und
- Figur 14: eine schematische Darstellung eines dritten Ausführungsbeispiels eines erfindungsgemäßen 10-Gang-Automatgetriebes.

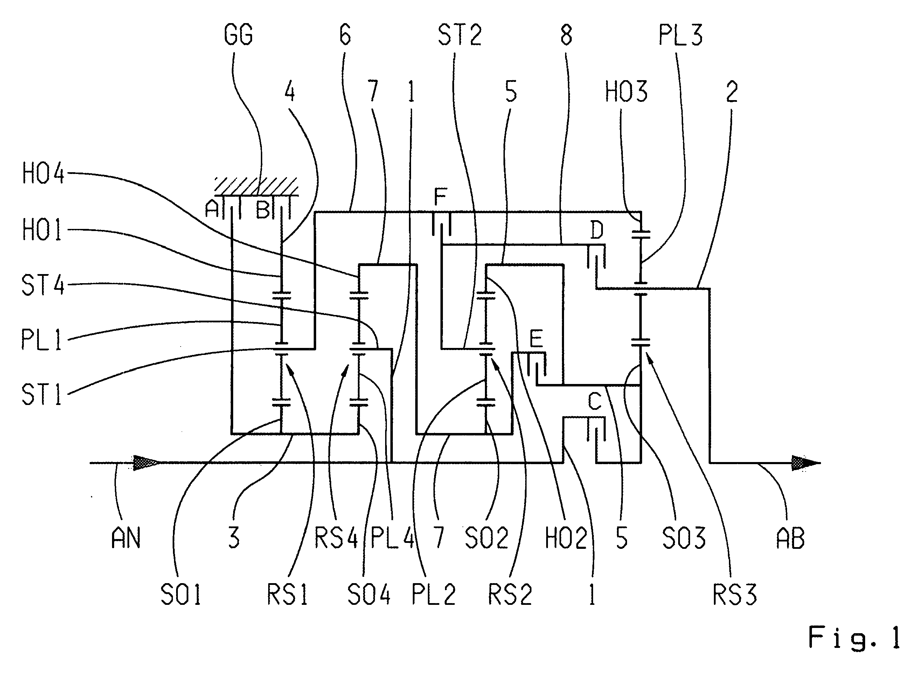

In Figur 1 ist ein erstes Ausführungsbeispiel eines erfindungsgemäßen 10-Gang-Automatgetriebes schematisch vereinfacht dargestellt. Das Getriebe umfasst eine Antriebswelle AN, eine Abtriebswelle AB, vier Planetenradsätze RS1, RS2, RS3, RS4 und sechs Schaltelemente A, B, C, D, E, F, die alle in einem Gehäuse GG des Getriebes angeordnet sind. Alle vier Ptanetenradsätze RS1, RS2, RS3, RS4 sind als einfache Minus-Planetenradsätze ausgebildet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit HO1, H02, H03 und H04 bezeichnet, die Sonnenräder mit SO1, S02, S03 und S04, die Planetenräder mit PL1, PL2, PL3 und PL4, und die Stege, an denen die genannten Planetenräder rotierbar gelagert sind, mit ST1, ST2, ST3 und ST4. Das erfindungsgemäße Automatgetriebe weist insgesamt acht drehbare Wellen auf, die mit 1 bis 8 bezeichnet sind.

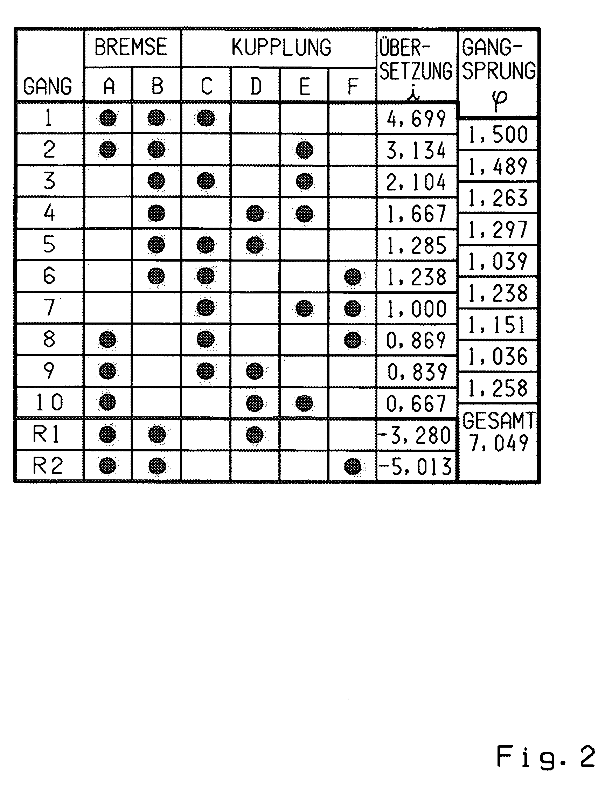

Die Schaltelemente A und B sind als Bremsen ausgebildet, die im dargestellten Ausführungsbeispiel beide als reibschlüssig schaltbare Lamellenbremse ausgeführt sind, in einer anderen Ausgestaltung auch als reibschlüssig schaltbare Bandbremse oder beispielsweise auch ais formschlüssig schaltbare Klauen- oder Konusbremse ausgeführt sein können. Die Schaltelemente C, D, E und F sind als Kupplungen ausgebildet, die im dargestellten Ausführungsbeispiel alle als reibschlüssig schaltbare Lamellenkupplung ausgeführt sind, in einer anderen Ausgestaltung beispielsweise auch als formschlüssig schaltbare Klauen- oder Konuskupplung ausgeführt sein können. Mit diesen insgesamt sechs Schaltelementen A bis F ist ein selektives Schalten von zehn Vorwärtsgängen und bis zu zwei Rückwärtsgänge realisierbar, was später anhand Figur 2 noch näher erläutert wird.

Hinsichtlich der Kopplung der einzelnen Elemente der vier Planetenradsätze RS1, RS2, RS3, RS4 untereinander und zur Antriebs- und Abtriebswelle AN, AB ist bei dem Automatgetriebe gemäß Figur 1 folgendes vorgesehen: Der Steg ST4 des vierten Planetenradsatzes RS4 und die Antriebswelle AN sind verdrehfest miteinander verbunden und bilden die mit 1 bezeichnete erste Welle des Automatgetriebes. Der Steg ST3 des dritten Planetenradsatzes RS3 und die Abtriebswelle AB sind drehfest miteinander verbunden und bilden die mit 2 bezeichnete zweite Welle des Automatgetriebes. Das Sonnenrad SO1 des ersten Planetenradsatzes RS1 und das Sonnenrad S04 des vierten Planetenradsatzes RS4 sind verdrehfest miteinander verbunden und bilden die mit 3 bezeichnete dritte Welle des Automatgetriebes. Das Hohlrad HO1 des ersten Planetenradsatzes RS1 bildet die mit 4 bezeichnete vierte Welle des Automatgetriebes. Das Hohlrad H02 des zweiten Planetenradsatzes RS2 und das Sonnenrad S03 des dritten Planetenradsatzes RS3 sind verdrehfest miteinander verbunden und bilden die mit 5 bezeichnete fünfte Welle des Automatgetriebes. Der Steg ST1 des ersten Planetenradsatzes RS1 und das Hohlrad H03 des dritten Planetenradsatzes RS3 sind verdrehfest miteinander verbunden und bilden die mit 6 bezeichnete sechste Welle des Automatgetriebes. Das Sonnenrad S02 des zweiten Planetenradsatzes RS2 und das Hohlrad H04 des vierten Planetenradsatzes RS4 sind verdrehfest miteinander verbunden und bilden die mit 7 bezeichnete siebte Welle 7 des Automatgetriebes. Der Steg ST2 des zweiten Planetenradsatzes RS2 bildet die mit 8 bezeichnete achte Welle des Automatgetriebes.

Hinsichtlich der Kopplung der sechs Schaltelemente A bis F an die so beschriebenen Wellen 1 bis 8 des Getriebes ist bei dem in Figur 1 dargestellten erfindungsgemäßen Automatgetriebe folgendes vorgesehen: Das erste Schaltelement A ist im Kraftfluss zwischen der dritten Welle 3 und dem Getriebegehäuse GG angeordnet. Das zweite Schaltelement B ist im Kraftfluss zwischen der vierten Welle 4 und dem Getriebegehäuse GG angeordnet. Das dritte Schaltelement C ist im Kraftfluss zwischen der fünften Welle 5 und der ersten Welle 1 angeordnet. Das vierte Schaltelement D ist im Kraftfluss zwischen der achten Welle 8 und der zweiten Welle 2 angeordnet ist. Das fünfte Schaltelement E ist im Kraftfluss zwischen der siebten Welle 7 und der fünften Welle 5 angeordnet. Das sechste Schaltelement F schließlich ist im Kraftfluss zwischen der sechsten Welle 6 und der achten Welle 8 angeordnet.

In dem in Figur 1 dargestellten Ausführungsbeispiel sind die vier Planetenradsätze RS1, RS2, RS3, RS4 in axialer Richtung gesehen in der definierten Reihenfolge "RS1, RS4, RS2, RS3" koaxial hintereinander angeordnet, wobei Antriebswelle AN und Abtriebswelle AB koaxial zueinander angeordnet sind und der erste Planetenradsatz RS1 den antriebsnahen Radsatz des Automatgetriebes und der dritte Planetenradsatz RS3 den abtriebsnahen Radsatz des Automatgetriebes bildet. Diese Anordnung "RS1, RS4, RS2, RS3" ermöglicht in vorteilhafter Weise, dass die vier Planetenradsätze RS1, RS2, RS3, RS4 jeweils nur von einer Welle des Automatgetriebes in axialer Richtung zentrisch durchgriffen werden.

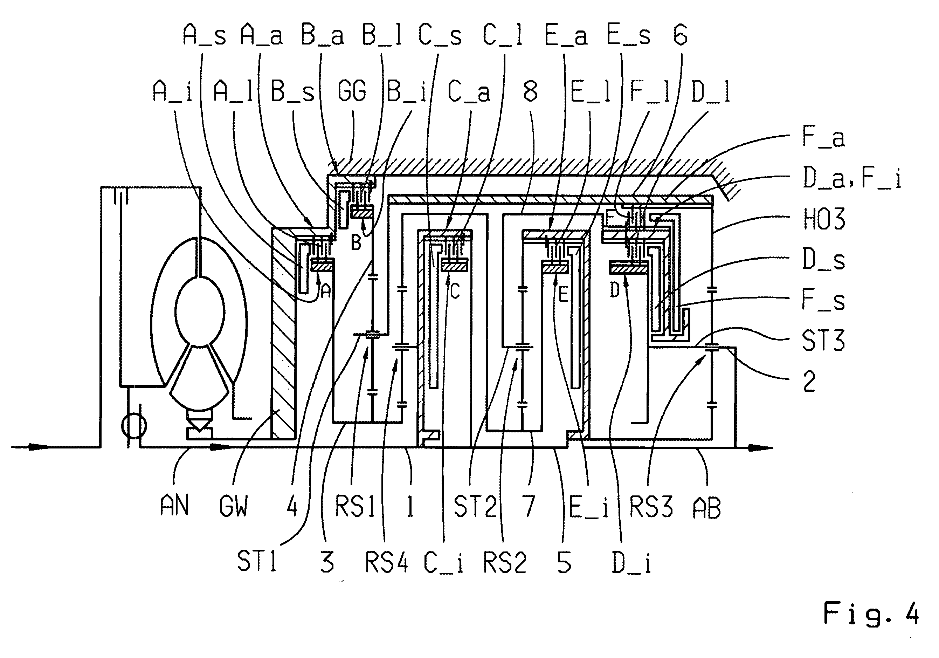

Im Prinzip ist die räumliche Anordnung der Schaltelemente eines erfindungsgemäßen Automatgetriebes innerhalb des Getriebes beliebig und wird nur durch die Abmessungen und die äußere Formgebung des Getriebegehäuses GG begrenzt. Entsprechend ist die in Figur 1 dargestellte Bauteiianordnung ausdrücklich als nur eine von zahlreichen möglichen Bauteilanordnungs-Varianten zu verstehen. Zahlreich Anregungen hierzu findet der Fachmann beispielsweise in der bereits erwähnten WO 2006/074707 A1. Das in Figur 1 dargestellte Ausführungsbeispiel eignet sich aufgrund der schlanken Gehäusestruktur besonders gut für den Einbau in ein Kraftfahrzeug mit so genanntem "Standard-Antrieb". Die in Figur 1 dargestellte Bauteilanordnung basiert auf dem in Figur 4 der WO 2006/074707 A1 offenbarten Automatgetriebe und unterscheidet sich hiervon nur durch die Anbindung und Anordnung der Kupplung F, welche - wie bereits erwähnt - gegenüber der WO 2006/074707 A1 zusätzlich ist.

Wie aus Figur 1 ersichtlich, grenzen die beiden Planetenradsätze RS1 und RS4 unmittelbar aneinander an. Die beiden Bremsen A, B sind im dargestellten Ausführungsbeispiel räumlich gesehen axial nebeneinander in einem Bereich radial oberhalb des hier antriebsnahen Planetenradsatzes RS1 angeordnet, wobei die Bremse B zumindest teilweise radial über dem ersten Planetenradsatz RS1 angeordnet ist. Dabei weisen die Lamellenpakete dieser beiden Bremsen A, B hier beispielhaft einen zumindest ähnlichen Durchmesser auf. Die Bremse A kann auch konstruktiv einfach in einer antriebsnahen Gehäusewand des Getriebegehäuses GG integriert sein. Wie bereits angedeutet, ist die in Figur 1 dargestellte räumliche Anordnung der beiden Bremsen A, B als beispielhaft zu verstehen. So kann zur Einsparung von axialer Baulänge des Getriebes in einer anderen Ausgestaltung beispielsweise vorgesehen sein, dass bei unverändert axial nebeneinander angeordneten Lamellenpaketen die Bremse A zumindest teilweise in einem Bereich radial über dem ersten Planetenradsatz RS1 und die Bremse B zumindest teilweise in einem Bereich radial über dem vierten Planetenradsatz RS4 angeordnet ist. In noch einer anderen Ausgestaltung kann beispielsweise vorgesehen sein, dass die beiden Bremsen A, B nicht axial nebeneinander, sondern teilweise radial übereinander oder vollständig radial übereinander angeordnet sind.

Wie aus Figur 1 weiterhin ersichtlich, sind die drei Kupplungen C, D und E räumlich gesehen in einem Bereich axial zwischen dem zum vierten Planetenradsatz RS4 benachbarten zweiten Planetenradsatz RS2 und dem abtriebsnahen dritten Planetenradsatz RS3 angeordnet. Aus der dem dritten Planetenradsatz RS3 zugewandten Seite des zweiten Planetenradsatzes RS2 grenzt die Kupplung E unmittelbar an den zweiten Planetenradsatz RS2 an. Das Lamellenpaket der Kupplung D ist räumlich gesehen in etwa radial über dem Lamellenpaket der Kupplung C angeordnet, wodurch beide Kupplungen C und D axial an den dritten Planetenradsatz RS3 (auf dessen dem zweiten Planetenradsatz RS2 zugewandten Seite) angrenzen. Dabei umgreift die Welle 5, welche die Wirkverbindung zwischen dem Hohlrad H02 des zweiten Planetenradsatzes RS2 und dem Sonnenrad S03 des dritten Planetenradsatzes RS3 bildet, die Kupplung E in axialer Richtung vollständig, wodurch die Kupplung E innerhalb eines Zylinderraums angeordnet ist, der durch die Welle 5 gebildet wird. Weiterhin umgreift die Welle 8, welche die Wirkverbindung zwischen dem Steg ST2 des zweiten Planetenradsatzes RS2 und der Kupplung D bildet, den zweiten Planetenradsatz RS2 und die Kupplung E in axialer Richtung vollständig. Somit ist die Kupplung E also auch innerhalb eines Zylinderraums angeordnet, der durch die Welle 8 gebildet wird. Wie bereits angedeutet, ist die in Figur 1 dargestellte räumliche Anordnung der drei Kupplungen C, D und E als beispielhaft zu verstehen. So kann es je nach dem für den Einbau des Getriebes in das Fahrzeug zur Verfügung stehenden Bauraum zweckmäßig sein, das Lamellenpaket der Kupplung D in etwa radial über dem Lamellenpaket der Kupplung E anzuordnen. In einer anderen Ausgestaltung kann die Kupplung C beispielsweise axial zwischen der RS2-nahen Kupplung E und der RS3-nahen Kupplung D angeordnet sein, wobei in diesem Fall die Lamellenpakete der drei Kupplungen E, C, D vorzugsweise auf zumindest ähnlichem und großem Durchmesser angeordnet sind, wobei sich die daraus resultierende vergleichsweise große axiale Erstreckung dieser Kupplungsanordnung für einen "Standard-Antrieb" infolge der üblichen Kardantunnelkontur des Fahrzeugs nicht nachteilig auswirkt.

Wie bereits erwähnt, werden die vier Planetenradsätze RS1 bis RS4 jeweils höchstens von einer Welle des Getriebes in axialer Richtung zentrisch durchgriffen. Konkret werden die Planetenradsätze RS1, RS4 und RS2 lediglich von der Antriebswelle AN bzw. von der Welle 1 in axialer Richtung zentrisch vollständig durchgriffen, wobei die Antriebswelle AN in ihrem axialen Verlauf die dritte Welle 3, die siebte Welle 7 und einen Abschnitt der fünften Welle 5 zentrisch durchgreift. Dies ist besonders vorteilhaft einerseits für die Dimensionierung der Antriebswelle AN und der Radsätze, andererseits auch für die vergleichsweise einfache Schmiermittelzuführung zu den Planetenrädern der vier Planetenradsätze RS1 bis RS4 und für die vergleichsweise einfache Druck- und Schmiermittelzuführung zu den drei Kupplungen E, D, C.

Wie aus Figur 1 weiterhin ersichtlich, übergreift die Welle 6 des Getriebes, die ja die Wirkverbindung zwischen dem Steg ST1 des ersten Planetenradsatzes RS1 und dem Hohlrad H03 des dritten Planetenradsatzes RS3 bildet, in ihrem axialen Verlauf den vierten und zweiten Planetenradsatz RS4, RS2 sowie die beiden Kupplungen E, D vollständig und bildet dabei denjenigen Zylinderraum, innerhalb dessen das Lamellenpaket der Kupplung F und die zum Betätigen dieses Lamellenpaketes vorgesehene Servoeinrichtung der Kupplung F angeordnet sind. Wie bereits erwähnt, ist diese Kupplung F in dem der gattungsbildenden WO 20061074707 A1 nicht vorhanden. In dem in Figur 1 dargestellten Ausführungsbeispiel ist das Lamellenpaket der Kupplung F dabei räumlich gesehen in einem Bereich axial zwischen dem vierten Planetenradsatz RS4 und dem zweiten Planetenradsatz RS2 angeordnet, auf einem Durchmesser radial oberhalb der Planetenradsätze RS4, RS2. Entsprechend der kinematischen Anbindung der Kupplung F an die sechste Welle 6 und die achte Welle 8 des Getriebes und der räumlichen Lage der Welle 8 zentrisch innerhalb der Welle 6 bildet ein Abschnitt der Welle 6 hier den Außenlamellenträger und ein Abschnitt der Welle 8 hier den Innenlamellenträger der Kupplung F. Hieraus ist auch ersichtlich, dass der Fachmann für die Anordnung des Lamellenpaketes der Kupplung F in axialer Richtung gesehen gewisse Freiheiten hat. So kann in einer von Figur 1 abweichenden Ausgestaltung beispielsweise vorgesehen sein, dass das Lamellenpaket der Kupplung F in einem Bereich radial über dem Vierten Planetenradsatz RS4 oder in einem Bereich radial über dem zweiten Planetenradsatz RS2 oder in einem Bereich axial zwischen dem zweiten Planetenradsatz RS2 und dem dritten Planetenradsatz RS3 - radial über der Kupplungsbaugruppe C/D/E und/oder nahe dem Planetenradsatz RS3 - angeordnet sein. Die dem Lamellenpaket der Kupplung F zugeordnete Servoeinrichtung kann sowohl auf der dem ersten Planetenradsatz RS1 zugewandten Seite des Lamellenpaketes der Kupplung F angeordnet sein als auch auf der dem dritten Planetenradsatz RS3 zugewandten Seite des Lamellenpaketes der Kupplung F. Beispiele hierzu werden anhand der anderen Figuren später noch näher erläutert.

In Figur 2 ist ein beispielhaftes Schaltschema des erfindungsgemäßen 10-Gang-Automatgetriebes gemäß Figur 1 dargestellt. In jedem Gang sind drei Schaltelemente geschlossen und drei Schaltelemente offen. Neben der Schaltlogik können dem Schaltschema auch beispielhafte Werte für die jeweiligen Übersetzungen i der einzelnen Gangstufen und die daraus zu bestimmenden Stufensprünge □ entnommen werden. Die angegebenen Übersetzungen i ergeben sich aus den (typischen) Standgetriebeübersetzungen der vier Planetensätze RS1, RS2, RS3, RS4 von minus 2,0, minus 1,60, minus 3,70 und minus 2,00. Des Weiteren kann dem Schaltschema entnommen werden, dass bei sequentieller Schaltweise Doppelschaltungen bzw. Gruppenschaltungen vermieden werden, da zwei in der Schaltlogik benachbarte Gangstufen stets zwei Schaltelemente gemeinsam benutzen. Der siebte Vorwärtsgang ist als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schließen der Bremse B und der Kupplungen D und E, der fünfte Vorwärtsgang durch Schließen der Bremse B und der Kupplungen C und D, der sechste Vorwärtsgang durch Schließen der Bremse B und der Kupplungen C und F, der siebte Vorwärtsgang durch Schließen der Kupplungen C, E und F, der achte Vorwärtsgang durch Schließen der Bremse A und der Kupplungen C und F, der neunte Vorwärtsgang durch Schließen der Bremse A und der Kupplungen C und D, sowie der zehnte Vorwärtsgang durch Schließen der Bremse A und der Kupplungen D und E. Wie aus dem Schaltschema weiter ersichtlich, ergibt sich ein erster Rückwärtsgang durch Schließen der Bremsen A und B und der Kupplung D. Ein zweiter Rückwärtsgang ergibt sich durch Schließen der Bremsen A und B und der Kupplung F.

Gemäß der Erfindung ist ein Anfahren des Kraftfahrzeugs mit einem im Getriebe integrierten Schaltelement möglich. Hierbei ist ein Schaltelement besonders geeignet, das sowohl im ersten Vorwärtsgang als auch im Rückwärtsgang benötigt wird, hier also vorzugsweise die Bremse A oder die Bremse B. In vorteilhafter Weise werden diese beiden Bremsen A, B auch im zweiten Vorwärtsgang benötigt. Wird die Bremse B als im Getriebe integriertes Anfahrelement genutzt, so ist damit sogar ein Anfahren in den ersten fünf Vorwärtsgängen und in beiden Rückwärtsgängen möglich. Wie aus dem Schaltschema ersichtlich, eignen sich als sinnvolles getriebeinternes Anfahrelement auch die Kupplung C zum Anfahren in Vorwärtsfahrtrichtung und die Kupplung D zum Anfahren in Rückwärtsfahrtrichtung.

Ein getriebeseitiger Hillholder, bei dem die Abtriebswelle AB des Getriebes gegen das Getriebegehäuse GG festgesetzt ist, ergibt sich durch gleichzeitiges Schließen der Bremsen A und B und der Kupplungen D und F. Ein Anfahren im ersten Vorwärtsgang aus zuvor aktivierter Hillholder-Funktion heraus ist mittels einer einfachen Überschneidungsschaltung möglich, indem die Kupplung C geschlossen wird, während die Kupplungen D und F simultan dazu geöffnet werden. Ein Anfahren im zweiten Vorwärtsgang aus zuvor aktivierter Hillholder-Funktion heraus ist ebenfalls mittels einer einfachen Überschneidungsschaltung möglich, indem die Kupplung E geschlossen wird bei simultanem Öffnen der Kupplungen D und F. Besonders einfach ist ein Anfahren im ersten Rückwärtsgang aus zuvor aktivierter Hillholder-Funktion heraus, da hierzu lediglich die Kupplung F geöffnet werden muss. Ebenso einfach ist ein Anfahren im zweiten Rückwärtsgang aus zuvor aktivierter Hillholder-Funktion heraus, da hierzu lediglich die Kupplung D geöffnet werden muss.

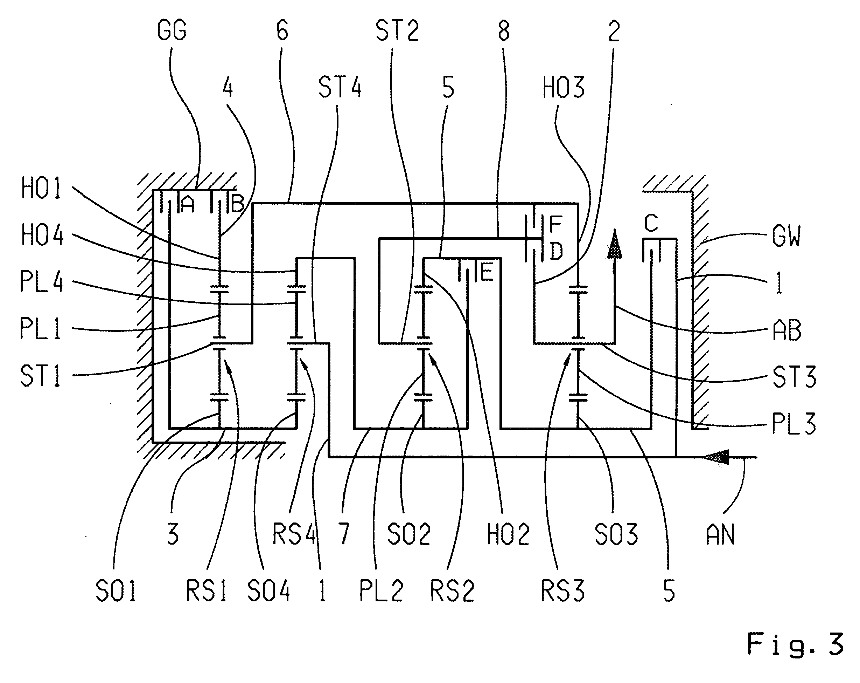

Die räumliche Anordnung der Schaltelemente des in Figur 1 dargestellten Ausführungsbeispiels eines erfindungsgemäßen 10-Gang-Automatgetriebes innerhalb des Getriebes kann im Prinzip beliebig sein und wird im Wesentlich nur durch die Abmessungen und die äußere Formgebung des Getriebegehäuses GG begrenzt. Entsprechend sind in den Figuren 3 bis 11 verschiedene Beispiele für sinnvolle Bauteilanordnungs-Varianten des 10-Gang-Automatgetriebes gemäß Figur 1 dargestellt, jeweils mit gegenüber Figur 1 unveränderter kinematischer Kopplung der Radsatzelemente, Schaltelemente und Wellen. Auch sind bei den in den Figuren 3 bis 11 dargestellten Bauteilanordnungs-Varianten die vier Planetenradsätze RS1 bis RS4 wie in Figur 1 in axialer Richtung gesehen in der Reihenfolge "RS1, RS4, RS2, RS3" koaxial hintereinander angeordnet.

Figur 3 zeigt nun eine beispielhafte erste Bauteilanordnungs-Variante für das Getriebe gemäß Figur 1, wiederum in vereinfachter schematischer Darstellung. Im Unterschied zu Figur 1 sind Antriebswelle AN und Abtriebswelle AB nun nicht mehr koaxial zueinander angeordnet, wodurch sich diese erste Bauteilanordnungs-Variante besonders für ein Fahrzeug mit so genanntem Front-Quer-Antrieb mit achsparallel zum Getriebeantrieb angeordnetem Getriebeabtrieb eignet. Ein weiterer Unterschied zu Figur 1 ist, dass der Antrieb des Getriebes nunmehr beispielhaft auf der dem ersten Planetenradsatz RS1 gegenüberliegenden Seite des Getriebes angeordnet ist. Dies ist möglich, weil die Antriebswelle AN bzw. die erste Welle 1 des Getriebes das Getriebe auf dessen ganzer axialen Länge zentrisch durchgreifen kann. Im Unterschied zu Figur 1 ist bei dem Getriebe gemäß Figur 3 das dritte Schaltelement C nicht auf der dem zweiten Planetenradsatz RS2 zugewandten Seite des dritten Planetenradsatzes RS3 angeordnet ist, sondern nunmehr auf der dem zweiten Planetenradsatz RS2 abgewandten Seite des dritten Planetenradsatzes RS3. Dabei verläuft die Abtriebswelle AB - beispielhaft in Art eines Stimtriebs - zumindest abschnittsweise axial zwischen Planetenradsatz RS3 und Kupplung C. Hierdurch steht für die Anordnung der Kupplung C ein großer Durchmesser im Bereich zwischen dem mit dem Steg ST3 verbundenen Abtriebsstimrad und der - hier beispielhaft antriebsseitigen - Gehäuseaußenwand GW zur Verfügung. Ein weiterer Unterschied zwischen den Getrieben gemäß Figur 1 und Figur 3 besteht darin, dass in Figur 3 die Kupplung F - zumindest das Lamellenpaket der Kupplung F - räumlich gesehen radial über der Kupplung D axial neben dem dritten Planetenradsatz RS3 angeordnet ist, wodurch für die beiden Kupplungen D und E ein gemeinsamer Lamellenträger verwendbar ist, der dann als Innenlamellenträger für die Kupplung F und als Außenlamellenträger für die Kupplung D ausgebildet ist.

Anhand der folgenden Figuren 4 bis 11 werden weitere Ausführungsbeispiele für ein erfindungsgemäßes 10-Gang-Automatgetriebe beschrieben, basierend auf dem in Figur 1 dargestellten Getriebe mit koaxialem An- und Abtrieb, wobei insbesondere verschiedene sinnvolle Möglichkeiten der räumlichen Anordnung der Lamellenpakete und der diesen Lamellenpaketen zugeordneten Servoeinrichtungen der sechs Reibschaltelemente aufgezeigt werden sollen. Ergänzend zu den bereits genannten Bezugszeichen wird bei allen Figuren 4 bis 11 folgende zusätzliche Nomenklatur verwendet: Die Außenlamellenträger der sechs Schaltelemente A bis F sind mit A_a bis F_a bezeichnet, die Innenlamellenträger der sechs Schaltelemente A bis F mit A_i bis F_i, die Lamellenpakete der sechs Schaltelemente A bis F mit A_i bis F_i und die Servoeinrichtungen zum Betätigen dieser Lamellenpakete A_i bis F_l mit A_s bis F_s. Eine derartige Servoeinrichtung beinhaltet üblicherweise zumindest einen auf das jeweils zugeordnet Lamellenpaket wirkenden hydraulisch oder pneumatisch betätigbaren Kolben, einen auf diesen Kolben wirkenden Druckraum, der zum Zweck des Schließens des Lamellenpaketes mit Druckmittel befüllt werden kann, sowie ein Kolbenrückstellelement in Art einer Feder oder einer Rückstelldruckkammer zum Zweck des Öffnens des Lamellenpaketes. Ist das Schaltelement als Kupplung ausgeführt, weist die dieser Kupplung zugeordnete Servoeinrichtung üblicherweise auch eine Vorrichtung zum Ausgleich des rotatorischen Drucks des mit Druckmittel befüllten Druckraums auf, zumeist umfassend einen drucklos mit Schmiermittel befüllbaren und auf den Kolben gegen dessen Schließrichtung wirkenden Druckausgleichsraum. Im Übrigen sind die Darstellungen in den Figuren 4 bis 11 für den Fachmann selbsterklärend.

Figur 4 zeigt nun eine beispielhafte zweite Bauteilanordnungs-Variante für das Getriebe gemäß Figur 1. Im Unterschied zu Figur 1 ist das dritte Schaltelement C räumlich gesehen nunmehr vollständig axial zwischen dem vierten und zweiten Planetenradsatz RS2, RS4 angeordnet. Das vierte, fünfte und sechste Schaltelement D, E, F sind räumlich gesehen vollständig axial zwischen dem zweiten und dritten Planetenradsatz RS2, RS3 angeordnet, wobei das fünfte Schaltelement E axial unmittelbar an den zweiten Planetenradsatz RS2 angrenzt, und wobei das vierte und sechste Schaltelement D, F ein Baugruppe bilden, welche axial unmittelbar an den dritten Planetenradsatz RS3 angrenzt. Dabei weist diese Baugruppe einen gemeinsamen Lamellenträger auf, der einen Abschnitt der Welle 8 bildet und mit dem Steg ST2 des zweiten Planetenradsatzes RS2 verbunden ist. Dieser gemeinsame Lamellenträger ist für die Kupplung D als Außenlamellenträger D_a und für die Kupplung F als Innenlamellenträger F_i ausgebildet ist.

Weiterhin beinhaltet die genannte Baugruppe der Schaltelemente D, F das innerhalb des Zylinderraums des gemeinsamen Lamellenirägers D_a / F_i angeordnete Lamellenpaket D_l der Kupplung D, das radial über dem Lamellenpaket D_l angeordnete Lamellenpaket F_l der Kupplung F, die Servoeinrichtung D_s zum Betätigen des Lamellenpaket D_l der Kupplung D, sowie die Servoeinrichtung F_s zum Betätigen des Lamellenpaketes F_l der Kupplung F. Als konstruktive Besonderheit ist dabei vorgesehen, dass die Servoeinrichtung D_s innerhalb des Zylinderraums des gemeinsamen Lamellenträgers D_a / F_i angeordnet ist, dass die Servoeinrichtung F_s den gemeinsamen Lamellenträgers D_a / F_i teilweise koaxial umschließt, und dass beide Servoeinrichtungen D_s, F_s an dem gemeinsamen Lamellenträgers D_a / F_i axial verschiebbar gelagert sind, weitgehend axial nebeneinander angeordnet sind und nur durch eine Wand des Innenlamellenträgers D_i voneinander getrennt sind. Dabei wirken beide Servoeinrichtungen D_s, F_s jeweils auf die dem dritten Planetenradsatz RS3 zugewandten Seite des zugeordneten Lamellenpaketes D_l bzw. F_l und betätigen dieses jeweils zugeordnete Lamellenpaket D_l bzw. F_l beim Schließen der jeweiligen Kupplung D bzw. F axial in zum dritten Planetenradsatz RS3 entgegengesetzter Richtung bzw. axial in Richtung des zweiten Planetenradsatzes RS2. Beide Servoeinrichtungen D_s, F_s rotieren stets mit Drehzahl der Welle 8, also stets mit Drehzahl des Stegs ST2 des zweiten Planetenradsatzes RS2. bzw. der Abtriebswelle AB.

Der Innenlamellenträger D_i der Kupplung D bildet einen Abschnitt der Welle 2 und ist gemäß dem Getriebeschema über den Steg ST3 des hier abtriebsnahen dritten Planetenradsatzes RS3 mit der Abtriebswelle AB verbunden. Der dem Hohlrad H03 des dritten Planetenradsatz RS3 nahe Abschnitt der Welle 6 bildet den Außenlamellenträger F_a des sechsten Schaltelementes F, wobei der Außenlamellenträger F_a auf seiner dem dritten Planetenradsatzes RS3 abgewandten Seite entsprechend dem Getriebeschema mit dem Steg ST1 des hier antriebsnahen ersten Planetenradsatzes RS1 verbunden ist.

Ein weiterer Unterschied zwischen den Getrieben gemäß Figur 1 und Figur 4 besteht darin, dass das als Bremse ausgebildete erste Schaltelement A in Figur 4 auf einem kleineren Durchmesser angeordnet ist als das ebenfalls als Bremse ausgebildete zweite Schaltelement B, wodurch im Bereich radial über dem Lamellenpaket A_l der Bremse A und auf den antriebsnahen Seite axial neben dem Lamellenpaket B_l der Bremse B innerhalb des Getriebeinnenraums Bauraum geschaffen wird, der sich besonders gut für die Anordnung einer achsparallel zur Antriebswelle AN angeordneten (in Figur 4 zur Vereinfachung nicht dargestellten) Hydraulikpumpe des Getriebes eignet.

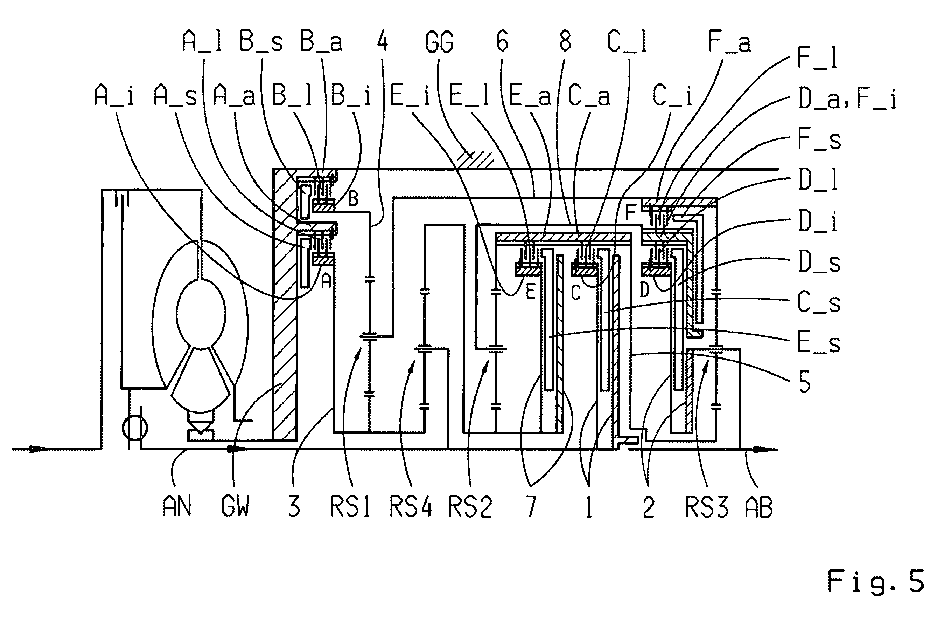

Figur 5 zeigt eine beispielhafte dritte Bauteilanordnungs-Variante für das Getriebe gemäß Figur 1. Im Unterschied zu Figur 1 ist gemäß Figur 5 nunmehr vorgesehen, dass die Bremse A räumlich gesehen weitgehend radial unterhalb der Bremse B angeordnet ist, dass die Kupplungen E, C und D in dieser Reihenfolge axial nebeneinander angeordnet sind mit Lamellenpaketen E_l, C_l und E_l gleichen oder zumindest annähernde gleichen Durchmessers, und dass die Kupplung F unmittelbar an den dritten Planetenradsatz RS3 auf dessen dem zweiten Planetenradsatz RS2 zugewandeten Seite angrenzt. Für die beiden Kupplungen E und C ist ein gemeinsamer Lamellenträger vorgesehen, der sowohl für die Kupplung E als auch für die Kupplung C als Außenlamellenträger E_a, C_a ausgebildet ist. Vom konstruktiven Aufbau her sind beide Kupplungen E und C ähnlich.

Der konstruktive Aufbau der beiden Kupplungen D und F als Baugruppe ist abgeleitet aus Figur 4. Im Unterschied zu Figur ist in Figur 5 vorgesehen, dass nur die Servoeinrichtung F_s der radial äußeren Kupplung F an dem für die beiden Kupplungen D und F gemeinsamen Lamellenträger D_a / F_i axial verschiebbar gelagert ist und stets mit Drehzahl der Welle 8 rotiert, wohingegen die Servoeinrichtung D_s der radial inneren Kupplung D an dem Innenlamellenträger D_i der Kupplung D axial verschiebbar gelagert ist und stets mit Drehzahl der Welle 2 rotiert. Entsprechend dieser Konstruktion ist der genannten Baugruppe D / F der beiden Kupplungen D, F auch der genannte Innenlamellenträger D_i zuzurechnen.

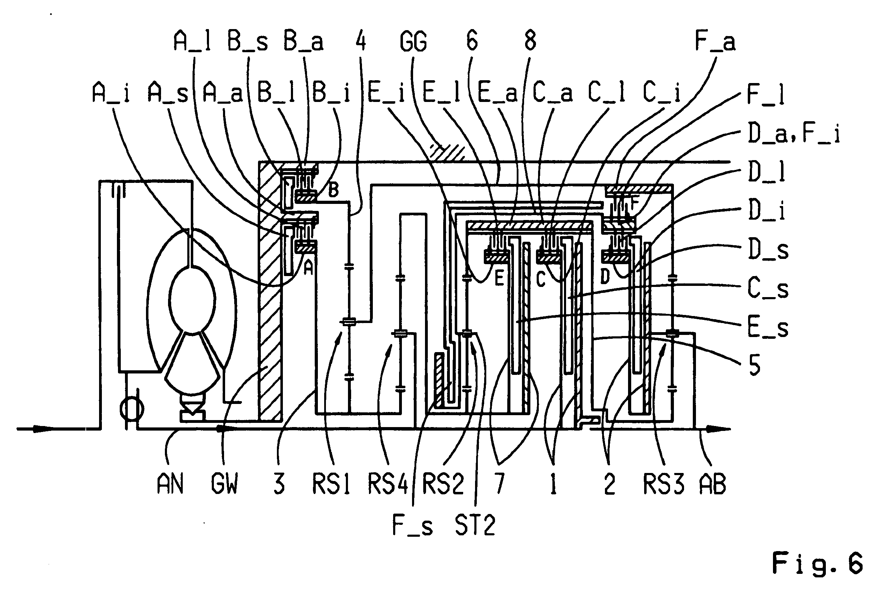

Figur 6 zeigt eine beispielhafte vierte Bauteilanordnungs-Variante für das Getriebe gemäß Figur 1, basierend auf der in Figur 5 dargestellten dritten Bauteilanordnungs-Variante. Die dritte und vierte Bauteilanordnungs-Variante unterscheiden sich lediglich durch die konstruktive Ausgestaltung und räumlichen Anordnung der Servoeinrichtung F_s der Kupplung F. Im Unterschied zu Figur 5 rotiert die Servoeinrichtung F_s gemäß Figur 6 nunmehr stets mit Drehzahl der achten Welle 8 des Getriebes, also stets mit Drehzahl des Innenlamellenträgers F_i der Kupplung F. Hierzu ist vorgesehen, dass die Servoeinrichtung F_s räumlich gesehen weitgehend in einem Bereich axial zwischen dem vierten und zweiten Planetenradsatz RS4, RS2 angeordnet ist, wobei zumindest der Druckraum dieser Servoeinrichtung F_s benachbart zum Steg ST2 des zweiten Planetenradsatzes RS2 angeordnet ist, der Kolben dieser Servoeinrichtung F_s axial verschiebbar an diesem Steg ST2 oder an dem Innenlamellenträgers F_i der Kupplung F gelagert ist und ein auf das Lamellenpaket F_l der Kupplung F wirkender Betätigungsfinger dieses Kolbens den Planetenradsatz RS2 sowie die Kupplungen E und C in axialer Richtung radial übergreift. Beim Schließen der Kupplung F betätigt der genannte Kolben bzw. der genannte Betätigungsfinger der Servoeinrichtung F_s das Lamellenpaket F_l axial in Richtung des dritten Planetenradsatzes RS3.

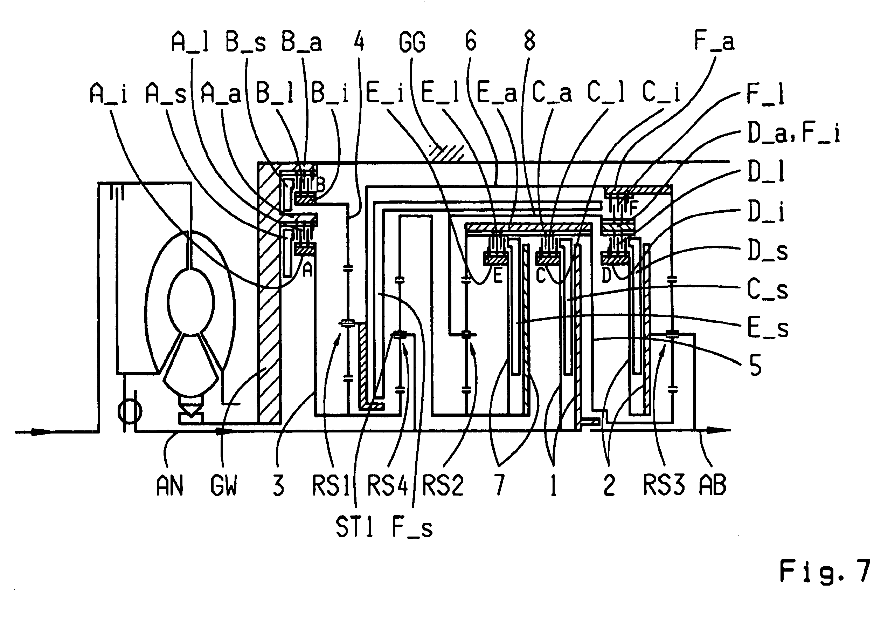

Figur 7 zeigt eine beispielhafte fünfte Bauteilanordnungs-Variante für das Getriebe gemäß Figur 1, ebenfalls basierend auf der in Figur 5 dargestellten dritten Bauteilanordnungs-Variante. Die dritte und fünfte Bauteilanordnungs-Variante unterscheiden sich lediglich durch die konstruktive Ausgestaltung und räumlichen Anordnung der Servoeinrichtung F_s der Kupplung F. Im Unterschied zu Figur 5 rotiert die Servoeinrichtung F_s gemäß Figur 7 nunmehr stets mit Drehzahl der sechsten Welle 6 des Getriebes, also stets mit Drehzahl des Außenlamellenträgers F_a der Kupplung F. Hierzu ist vorgesehen, dass die Servoeinrichtung F_s räumlich gesehen weitgehend in einem Bereich axial zwischen dem ersten und vierten Planetenradsatz RS1, RS4 angeordnet ist, wobei zumindest der Druckraum dieser Servoeinrichtung F_s benachbart zum Steg ST1 des ersten Planetenradsatzes RS1 angeordnet ist, der Kolben dieser Servoeinrichtung F_s axial verschiebbar an diesem Steg ST1 oder an dem Außenlamellenträgers F_a der Kupplung F gelagert ist und ein auf das Lamellenpaket F_l der Kupplung F wirkender Betätigungsfinger dieses Kolbens die Planetenradsätze RS4 und RS2 sowie die Kupplungen E und C in axialer Richtung radial übergreift. Beim Schließen der Kupplung F betätigt der genannte Kolben bzw. der genannte Betätigungsfinger der Servoeinrichtung F_s das Lamellenpaket F_l axial in Richtung des dritten Planetenradsatzes RS3.

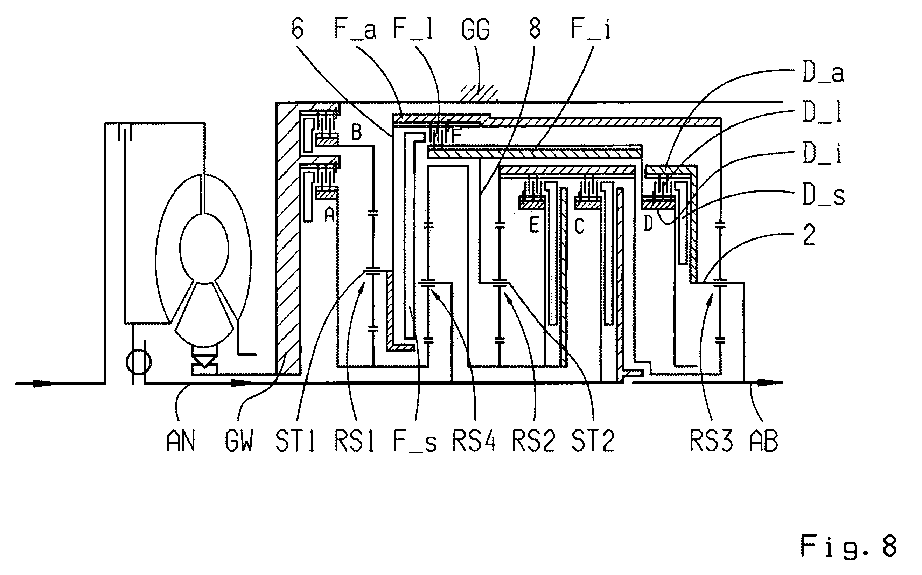

Figur 8 zeigt eine beispielhafte sechste Bauteilanordnungs-Variante für das Getriebe gemäß Figur 1, basierend auf der in Figur 7 dargestellten fünften Bauteilanordnungs-Variante. Die sechste Bauteilanordnungsvariante unterscheidet sich von der fünften Bauteilanordnungsvariante insbesondere dadurch, dass gemäß Figur 8 das Lamellenpaket F_l der Kupplung F räumlich gesehen nunmehr in einem Bereich radial über den axial unmittelbar nebeneinander angeordneten Planetenradsätzen RS2 und RS4 und dabei zumindest teilweise radial über dem vierten Planetenradsatz RS4 angeordnet ist. Hierzu erstreckt sich ein vom Steg ST2 des zweiten Planetenradsatzes RS2 ausgehender und als Innenlamellenträger F_i für die Kupplung F ausgebildeter Abschnitt der achten Welle 8 des Getriebes axial in Richtung des ersten Planetenradsatzes RS1, der ja auf der dem zweiten Planetenradsatz RS2 abgewandten (und dem Antrieb zugewandten) Seite des vierten Planetenradsatzes RS4 angeordnet ist. Entsprechend ist ein im Bereich radial über dem Planetenradsatz RS4 angeordneter axialer Abschnitt der sechsten Welle 6 des Getriebes als Außenlamellenträger F_a für die Kupplung F ausgebildet. Die Servoeinrichtung F_s der Kupplung F ist im wesentlichen axial zwischen den Planetenradsätzen RS1 und RS4 angeordnet, rotiert stets mit Drehzahl des Stegs ST1 des ersten Planetenradsatzes RS1 und betätigt das ihr zugeordnet Lamellenpaket F_l beim Schließen der Kupplung F axial in Richtung des zweiten bzw. dritten Planetenradsatzes RS2 , RS3.

Ein weiterer Unterschied zwischen den Getrieben gemäß Figur 7 und Figur 8 besteht darin, dass das gemäß Figur 8 der Innenlamellenträger D_i der Kupplung D mit der achten Welle 8 des Getriebes verbunden ist. Entsprechend ist gemäß Figur 8 der Außenlamellenträger D_a der Kupplung D mit der zweiten Welle 2 bzw. der Abtriebswelle AB verbunden. Dieser als Zylinder ausgebildete Außenlamellenträger D_a nimmt neben dem Lamellenpaket D_l der Kupplung D auch die zur Betätigung dieses Lamellenpaketes D_l vorgesehene Servoeinrichtung D_s der Kupplung D axial verschiebbar auf. Hierdurch ergibt sich ein vergleichsweise einfacher konstruktiver Aufbau der Kupplung D.

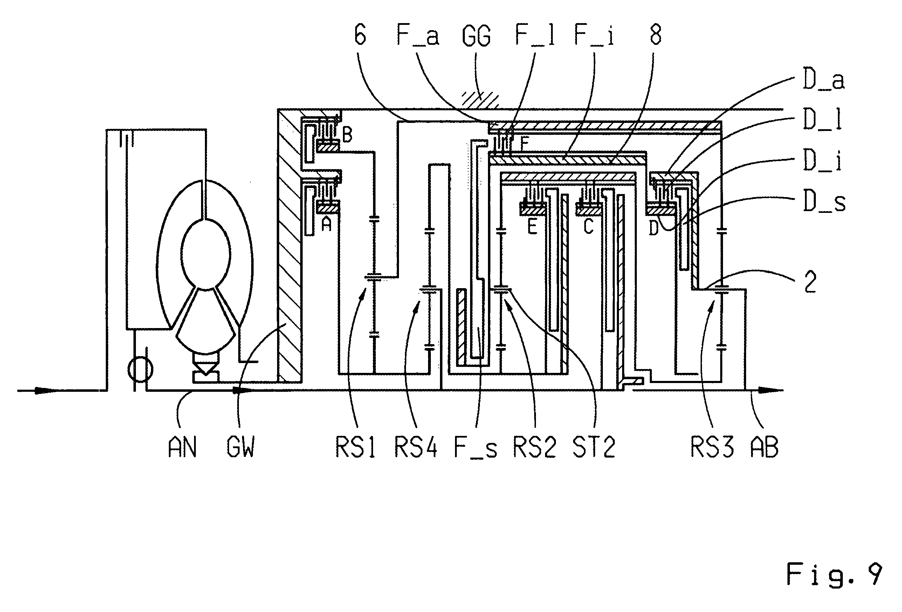

Figur 9 zeigt eine beispielhafte siebte Bauteilanordnungs-Variante für das Getriebe gemäß Figur 1, basierend auf der in Figur 8 dargestellten sechsten Bauteilanordnungs-Variante. Im Unterschied zur sechsten Bauteilanordnungs-Variante ist bei der siebten Bauteilanordnungs-Variante vorgesehen, dass das Lamellenpaket F_l der Kupplung F räumlich gesehen in einem Bereich radial über dem zweiten Planetenradsatz RS2 angeordnet ist, und dass die zur Betätigung dieses Lamellenpaketes F_l vorgesehene Servoeinrichtung F_s der Kupplung F räumlich gesehen weitgehend axial zwischen dem vierten Planetenradsatz RS4 und dem zweiten Planetenradsatz RS2 angeordnet ist. Dabei rotiert dieses Servoeinrichtung F_s stets mit Drehzahl der achten Welle 8 des Getriebes, also stets mit Drehzahl des Stegs ST2 des zweiten Planetenradsatzes RS2 bzw. mit Drehzahl des Innenlamellenträgers F_i der Kupplung F. Dabei ist die Servoeinrichtung F_s an dem genannten Steg ST2 oder an dem Innenlamellenträgers F_i axial verschiebbar gelagert und betätigt das ihr zugeordnet Lamellenpaket F_l beim Schließen der Kupplung F axial in Richtung des dritten Planetenradsatzes RS3.

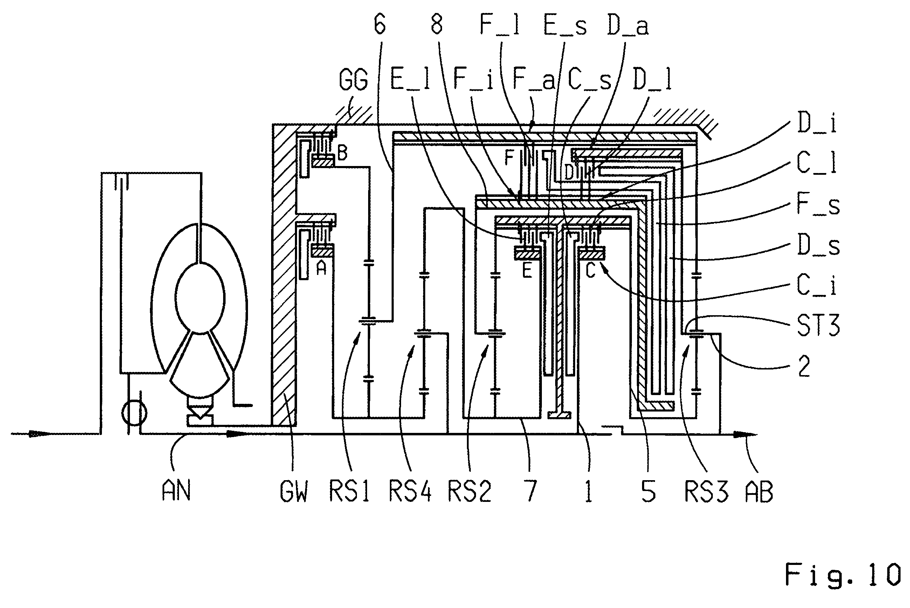

Figur 10 zeigt eine beispielhafte achte Bauteilanordnungs-Variante für das Getriebe gemäß Figur 1. Wesentlich bei dieser achten Bauteilanordnungs-Variante ist, dass alle vier Kupplungen C bis F räumlich gesehen zumindest annährend vollständig im Bereich axial zwischen den beiden Planetenradsätzen RS2 und RS3 angeordnet sind, mit folgenden konstruktiven Merkmalen:
■ die Kupplungen C und E sind axial nebeneinander angeordnet und bilden eine Baugruppe;
■ die Lamellenpakete D_l und F_l der Kupplungen D und F sind axial nebeneinander radial über den Lamellenpaketen C_l und E_l der Kupplungen C und E angeordnet;
■ die Lamellenpakete E_l und F_l sind benachbart zum Planetenradsatz RS2 angeordnet;
■ das Lamellenpaket F_l ist im wesentlichen radial über dem Lamellenpaket E_l angeordnet;
■ das Lamellenpaket D_l ist im wesentlichen radial über dem Lamellenpaket C_l angeordnet;
■ für die Kupplungen C und E ist ein gemeinsamer Lamellenträger vorgesehen, der einen Abschnitt der Welle 5 des Getriebes bildet, für beide Kupplungen C, E als Außenlamellenträger C_a, E_a ausgebildet ist und die Lamellenpakete C_l, E_l sowie die zur Betätigung dieser Lamellenpakete C_l, E_l vorgesehenen Servoeinrichtungen C_s, E_s der beiden Kupplungen C, E axial verschiebbar aufnimmt, wobei beide Servoeinrichtungen C_s, E_s stets mit Drehzahl der Welle 5 rotieren;
■ die beiden Servoeinrichtungen C_s, E_s sind axial unmittelbar nebeneinander und dabei zumindest teilweise axial zwischen den beiden Lamellenpaketen C_l, E_l angeordnet und werden nur durch eine Mantelfläche des gemeinsamer Außenlamellenträgers C_a, E_a der Kupplungen C, E voneinander getrennt, wobei die Servoeinrichtung C_s das ihr zugeordnete Lamellenpaket C_l bim Schließen der Kupplung C axial in Richtung des dritten Planetenradsatzes RS3 betätigt, und wobei die Servoeinrichtung E_s das ihr zugeordnete Lamellenpaket E_l beim Schließen der Kupplung E axial in Richtung des zweiten Planetenradsatzes RS2 betätigt;
■ für die Kupplungen D und F ist ein gemeinsamer Lamellenträger vorgesehen, der einen Abschnitt der Welle 8 des Getriebes bildet und für beide Kupplungen D, F als Innenlamellenträger D_i, F_i ausgebildet ist und die Lamellenpakete D_l, F_l sowie die zur Betätigung dieser Lamellenpakete D_l, F_l vorgesehenen Servoeinrichtungen D_s, F_s der beiden Kupplungen D, F axial verschiebbar aufnimmt, wobei beide Servoeinrichtungen D_s, F_s stets mit Drehzahl der Welle 8 rotieren;
■ die Servoeinrichtung D_s der Kupplung D betätigt das ihr zugeordnete Lamellenpaket D_l beim Schließen der Kupplung D axial in Richtung des zweiten Planetenradsatzes RS2;
■ die Servoeinrichtung F_s der Kupplung F betätigt das ihr zugeordnete Lamellenpaket F_l beim Schließen der Kupplung F ebenfalls axial in Richtung des zweiten Planetenradsatzes RS2, wobei ein auf das Lamellenpaket F_l wirkender Abschnitt oder Betätigungsfinger des druckbeaufschlagbaren axial verschiebbaren Kolbens der Servoeinrichtung F_s der Kupplung F die an dem für die Kupplungen D und F gemeinsamen Innenlamellenträger D_i / F_i gelagerten Innenlamellen des Lamellenpaketes D_l der Kupplung D in axialer Richtung durchgreift;
■ für die Kupplung D ist ein zylinderförmiger Außenlamellenträger D_a vorgesehen, der einen Abschnitt der Welle 2 des Getriebes bildet und über den Steg ST3 des dritten Planetenradsatzes RS3 mit der Abtriebswelle AB verbunden ist;
■ für die Kupplung F ist ein zylinderförmiger Außenlamellenträger F_a vorgesehen, der einen axialen Abschnitt der Welle 6 bildet, die Außenlamellen des Lamellenpaketes F_l der Kupplung F aufnimmt und in seinem axialen Verlauf den vierten Planetenradsatz RS4 und den für die Kupplungen D und F gemeinsamen Innenlamellenträger D_i / F_i und den Außenlamellenträger D_a der Kupplung D koaxial umschließt.

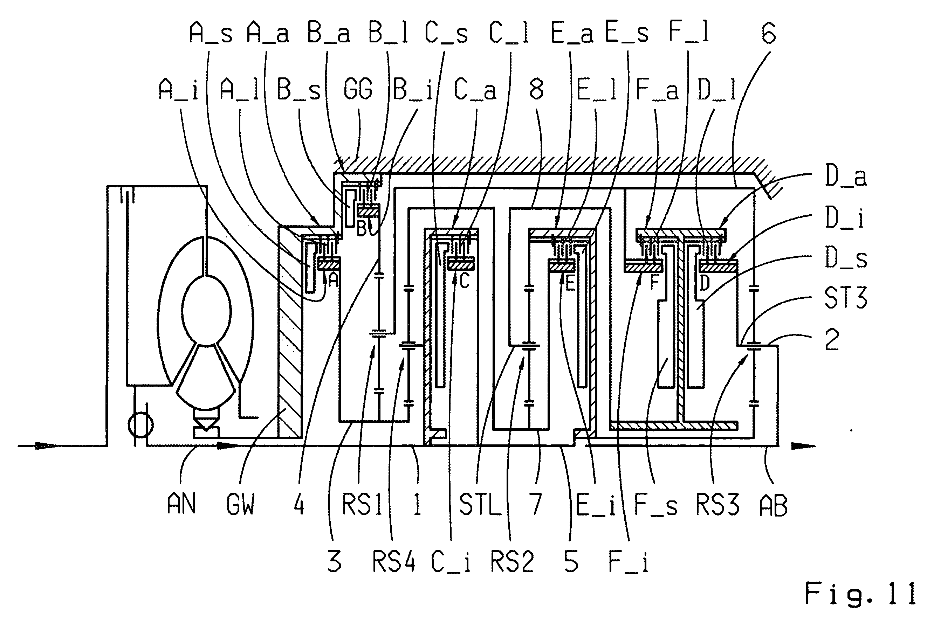

Figur 11 zeigt eine beispielhafte neunte Bauteilanordnungs-Variante für das Getriebe gemäß Figur 1, basierend auf der in Figur 4 dargestellten zweiten Bauteilanordnungs-Variante. Im Unterschied zur zweiten Bauteilanordnungs-Variante ist bei der neunten Bauteilanordnungs-Variante vorgesehen, dass die beiden Kupplungen D und F nunmehr axial nebeneinander angeordnet sind, als eine Baugruppe mit folgenden konstruktiven Merkmalen:
■ räumlich gesehen ist die Baugruppe axial zwischen der Kupplung E und dem dritten Planetenradsatz RS3 angeordnet;
■ die Kupplung D ist näher am dritten Planetenradsatz RS3 angeordnet als die Kupplung F;
■ für die Kupplungen D und F ist ein gemeinsamer Lamellenträger vorgesehen, der einen Abschnitt der Welle 8 des Getriebes bildet, für beide Kupplungen D, F als Außenlamellenträger D_a, F_a ausgebildet ist und die Lamellenpakete D_l, F_l sowie die zur Betätigung dieser Lamellenpakete D_l, F_l vorgesehenen Servoeinrichtungen D_s, F_s der beiden Kupplungen D, F axial verschiebbar aufnimmt, wobei beide Servoeinrichtungen D_s, F_s stets mit Drehzahl der Welle 8 bzw. des Stegs ST2 des zweiten Planetenradsatzes RS2 rotieren;
■ die beiden Servoeinrichtungen D_s, F_s sind axial unmittelbar nebeneinander und dabei zumindest teilweise axial zwischen den beiden Lamellenpaketen D_l, F_l angeordnet und werden nur durch eine Mantelfläche des gemeinsamer Außenlamellenträgers D_a / F_a der Kupplungen D, F voneinander getrennt;
■ die Servoeinrichtung D_s betätigt das ihr zugeordnete Lamellenpaket D_l beim Schließen der Kupplung D axial in Richtung des dritten Planetenradsatzes RS3;
■ die Servoeinrichtung F_s betätigt; das ihr zugeordnete Lamellenpaket F_l beim Schließen der Kupplung F axial in Richtung des zweiten Planetenradsatzes RS2;
■ der Innenlamellenträger D_i der Kupplung D ist mit dem Steg ST3 des dritten Planetenradsatzes RS3 verbunden; und
■ der Innenlamellenträger F_i der Kupplung F ist auf der dem dritten Planetenradsatzes RS3 gegenüber liegenden Seite der Baugruppe mit der Welle 6 des Getriebes verbunden, welche ja einen Zylinderraum bildet, innerhalb dessen der Planetenradsatz RS4, die Kupplung C, der Planetenradsatz RS2, die Kupplung E und die Baugruppe mit den beiden Kupplungen D, F angeordnet sind.

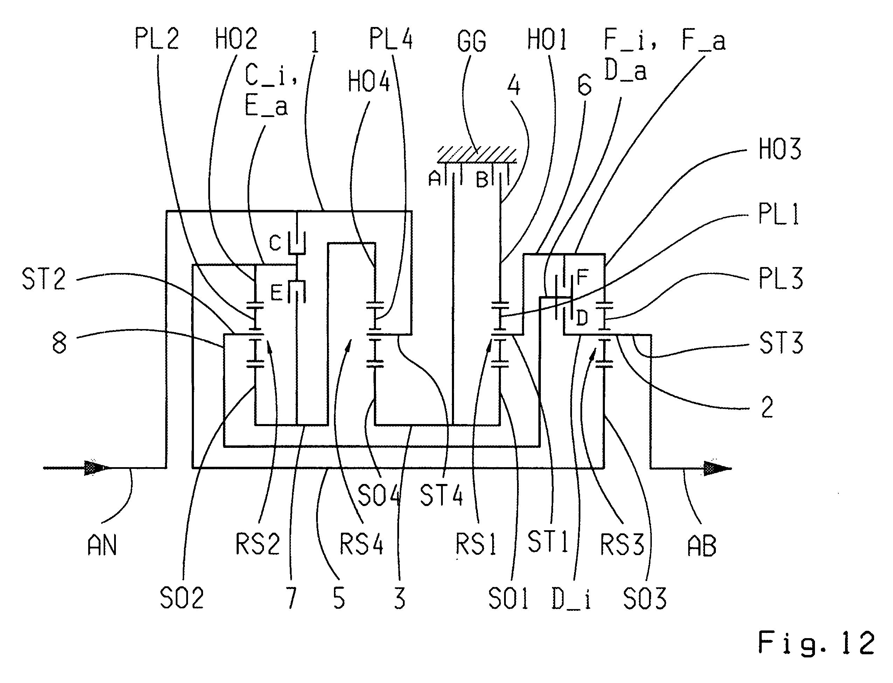

Figur 12 schließlich zeigt eine beispielhafte zehnte Bauteilanordnungs-Variante für das Getriebe gemäß Figur 1, in vereinfachter schematischer Darstellung. Ausgehend von der Überlegung, dass auch die räumliche Anordnung der vier Planetenradsätze RS1 bis RS4 relativ zueinander innerhalb des Getriebegehäuses GG in weiten Grenzen variabel ist, soll anhand Figur 12 ein erfindungsgemäßes Getriebe mit gegenüber Figur 1 veränderter Reihenfolge der vier koaxial in Reihe hintereinander angeordneten Planetenradsätze RS1 bis RS4 beschrieben werden, als ein Beispiel dafür, wie der Fachmann aus dem erfindungsgemäßen Getriebekonzept weitere sinnvolle Bauteilanordnungs-Variante ableiten kann. Dabei wird der Fachmann bei Bedarf auch die zuvor gegebenen Anregungen zur konstruktiven Ausgestaltung und Anordnung der einzelnen Bauteile des Getriebes in sinnvoller Weise auf das in Figur 12 vereinfacht dargestellte Getriebe anwenden.

Wie in Figur 12 ersichtlich, ist die kinematische Kopplung der einzelnen Elemente der vier Planetenradsätze RS1 bis RS4 untereinander und zu den sechs Schaltelementen A bis F und zur Antriebswelle AN und Abtriebswelle AB gegenüber dem Getriebe gemäß Figur 1 unverändert. Im Unterschied zu dem Getriebe gemäß Figur 1 ist bei der hier vorgeschlagenen zehnten Bauteilanordnungs-Variante vorgesehen, dass die vier einzelnen Minus-Planetenradsätze RS1 bis RS4 in axialer Richtung gesehen in der definierten Reihenfolge "RS2, RS4, RS1, RS3" koaxial hintereinander angeordnet, wobei Antriebswelle AN und Abtriebswelle AB koaxial zueinander angeordnet sind und der zweite Planetenradsatz RS2 den antriebsnahen Radsatz des Automatgetriebes und der dritte Planetenradsatz RS3 den abtriebsnahen Radsatz des Automatgetriebes bildet. In einer anderen Ausgestaltung für ein Getriebe, bei dem Antriebs- und Abtriebswelle nicht koaxial zueinander verlaufen, sondern achsparallel oder winklig zueinander, so können sowohl der Abtrieb als auch der Antrieb des Getriebes auf der gleichen Seite des Getriebegehäuses nahe dem dritten Planetenradsatz RS3 angeordnet sein.

Wie in Figur 12 weiterhin ersichtlich, bilden die beiden Kupplungen C und E eine Baugruppe mit einem für beide Kupplungen C, E gemeinsamen Lamellenträger zur Aufnahme der Lamellenpakete und Servoeinrichtungen beider Kupplungen C, E. Dieser gemeinsame Lamellenträger bildet eine Abschnitt der fünften Welle 5 des Getriebes und ist einerseits unmittelbar mit dem Hohlrad H02 des zweiten Planetenradsatzes RS2 verbunden und andererseits über ein lange Zwischenwelle, welche die Planetenradsätze RS2, RS4 und RS1 zentrisch durchgreift, mit dem Sonnenrad S03 des dritten Planetenradsatzes RS3 verbunden. In Figur 12 ist dieser gemeinsame Lamellenträger beispielhaft für die Kupplung C als Innenlamellenträger C_i und für die Kupplung E als Außenlamellenträger E_a ausgebildet, wobei das Lamellenpaket der Kupplung C in etwa radial über dem Lamellenpaket der Kupplung E angeordnet ist, in einem Bereich axial zwischen dem zweiten Planetenradsatz RS2 und dem vierten Planetenradsatz RS4. In diesem Fall ist es insbesondere für die Zuleitung von Druck und Schmiermittel günstig, die (in Figur 12 zur Vereinfachung nicht näher dargestellten) Servoeinrichtungen beider Kupplungen C, E an dem für beide Kupplungen C, E gemeinsamen Lamellenträger C_i / E_a axial verschiebbar zu lagern, sodass die Servoeinrichtungen beider Kupplungen C, E stets mit Drehzahl der fünften Welle 5 des Getriebes rotieren. Bei Bedarf wird der Fachmann das Lamellenpaket der Kupplung C auch axial verschieben, beispielsweise in einen Bereich radial über den zweiten Planetenradsatz RS2. Alternativ wird der Fachmann die Lamellenpakete beider Kupplungen C, E bei Bedarf auch axial nebeneinander anordnen.

Wie in Figur 12 weiterhin ersichtlich, bilden die beiden Bremsen A und B eine Baugruppe, die nunmehr im mittleren Bereich des Getriebes angeordnet ist. Die Bremsen A und B sind axial nebeneinander auf etwa dem gleichen Durchmesser radial oberhalb der Planetenradsätze RS1 und RS4 angeordnet, wobei die Bremse B - insbesondere das Lamellenpaket der Bremse B - in einem Bereich radial über dem ersten Planetenradsatz RS1 angeordnet ist und die Bremse A auf der dem vierten Planetenradsatz RS4 zugewandten Seite der Bremse B.

Wie in Figur 12 weiterhin ersichtlich, bilden die beiden Kupplungen D und F eine Baugruppe, die räumlich gesehen in einem Bereich axial zwischen dem ersten Planetenradsatz RS1 und dem dritten Planetenradsatz RS3 angeordnet ist. Zur Erzielung einer möglichst kompakten Bauform mit möglichst kurzer Baulänge sind die Lamellenpakte der beiden Kupplungen D, F radial übereinander angeordnet. In dem in Figur 12 dargestellten Ausführungsbeispiel ist hierzu ein für beide Kupplungen D, F gemeinsamer Lamellenträger zur Aufnahme der Lamellenpakete und Servoeinrichtungen beider Kupplungen D, F. vorgesehen. Dieser gemeinsame Lamellenträger bildet einen Abschnitt der achten Welle 8 des Getriebes und ist entsprechend über ein lange Zwischenwelle, welche die Planetenradsätze RS1, RS4 und RS2 zentrisch durchgreift und dabei die Welle 5 abschnittsweise radial umschließt, mit dem Steg ST2 des zweiten Planetenradsatzes RS2 verbunden. In Figur 12 ist dieser gemeinsame Lamellenträger beispielhaft für die Kupplung D als Außenlamellenträger D_a und für die Kupplung F als Innenlamellenträger F_i ausgebildet, wobei das Lamellenpaket der Kupplung F in etwa radial über dem Lamellenpaket der Kupplung D angeordnet ist. Entsprechend bildet der Innenlamellenträger D_i der (radial inneren) Kupplung D einen Abschnitt der Welle 2 des Getriebes und ist ständig mit dem Steg ST3 des dritten Planetenradsatzes RS3 und ständig mit der Abtriebswelle AB verbunden, während der Außenlamellenträger F_a der (radial äußeren) Kupplung F einen Abschnitt der Welle 6 des Getriebes bildet und ständig mit dem Steg ST1 der ersten Planetenradsatzes RS1 und ständig mit dem Hohlrad H03 des dritten Planetenradsatzes RS3 verbunden ist. Insbesondere für die Zuleitung von Druck und Schmiermittel ist es günstig, die (in Figur 12 zur Vereinfachung nicht näher dargestellten) Servoeinrichtungen beider Kupplungen D, F an dem für beide Kupplungen D, F gemeinsamen Lamellenträger D_,a / F_i axial verschiebbar zu lagern, sodass die Servoeinrichtungen beider Kupplungen D, F stets mit Drehzahl der Welle 8 des Getriebes rotieren. Bei Bedarf wird der Fachmann die Lamellenpakete beider Kupplungen D, F auch axial nebeneinander anordnen.

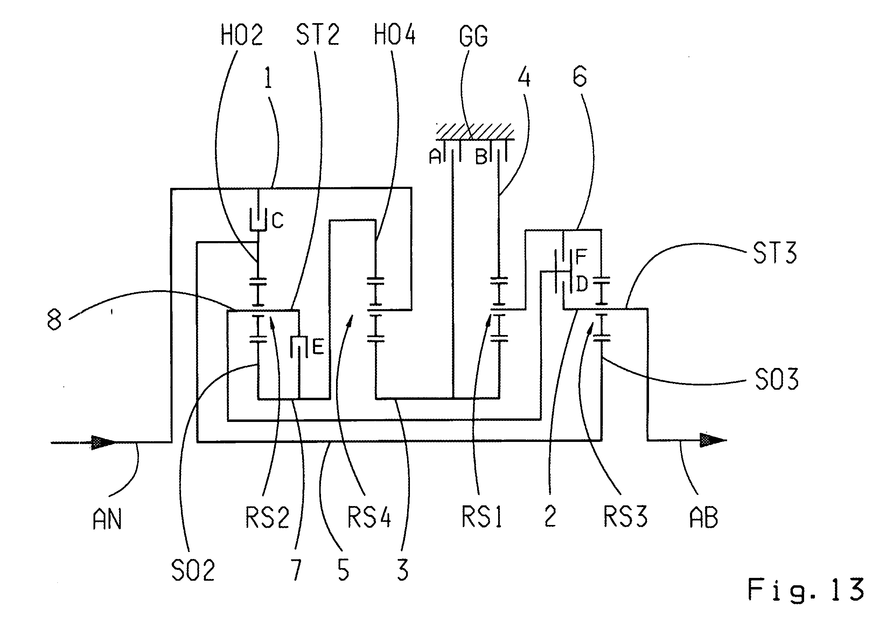

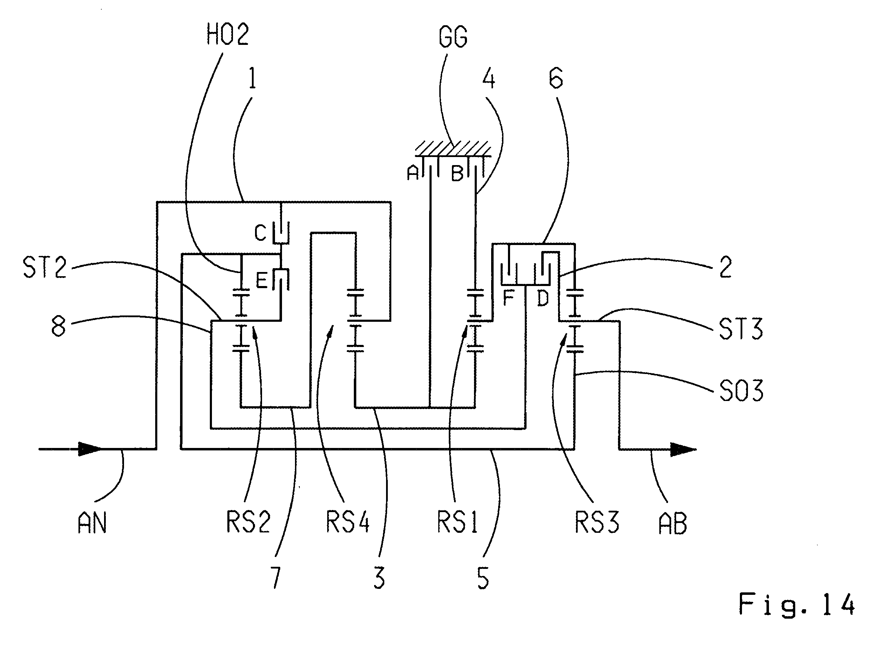

Ausgehend von dem Getriebeschema gemäß Figur 12, werden anhand der folgenden Figuren 13 und 14 nun zwei weitere Ausführungsbeispiele für ein erfindungsgemäßes 10-Gang-Automatgetriebe beschrieben, die beide mit der gleichen Schaltlogik gemäß Figur 2 betreibbar sind. Ausgehend von der Überlegung, dass das als Kupplung ausgebildete fünfte Schaltelement E des Getriebes dazu dient, den zweiten Planetenradsatz RS2 des Getriebes bei Bedarf festzusetzen, sind in den Figuren 13 und 14 zwei weitere Möglichkeiten aufgezeigt, dieses fünfte Schaltelement E kinematisch an den zweiten Planetenradsatz RS2 anzukoppeln.

Figur 13 zeigt also eine schematische Darstellung eines zweiten Ausführungsbeispiels eines erfindungsgemäßen 10-Gang-Automatgetriebes. Im Unterschied zu dem Getriebe gemäß Figur 12 ist bei dem Getriebe gemäß Figur 13 vorgesehen, dass die Kupplung E nunmehr im Kraftfluss zwischen der siebten Welle 7 des Getriebes und der achten Welle 8 des Getriebes angeordnet ist. Gemäß Figur 13 verbindet die Kupplung E im geschlossenen Zustand also Sonnenrad S02 und Steg ST2 des zweiten Planetenradsatzes RS2 miteinander und blockiert diesen somit. Die in Figur 13 dargestellte räumliche Anordnung der Bauteile innerhalb des Getriebegehäuses GG ist weitgehend identisch zu Figur 12. Geringfügige Unterschiede gibt es durch den Entfall des in Figur 12 vorgesehenen gemeinsamen Lamellenträger C_i / E_i. In Figur 13 ist vorgesehen, dass das Lamellenpaket der Kupplung E in einem Bereich axial zwischen den beiden Planetenradsätzen RS2 und RS4 angeordnet ist, während das Lamellenpaket der Kupplung C radial über dem zweiten Planetenradsatz RS2 angeordnet ist.

Figur 14 schließlich zeigt eine schematische Darstellung eines dritten Ausführungsbeispiels eines erfindungsgemäßen 10-Gang-Automatgetriebes.

Im Unterschied zu dem Getriebe gemäß Figur 12 ist bei dem Getriebe gemäß Figur 14 vorgesehen, dass die Kupplung E nunmehr im Kraftfluss zwischen der fünften Welle 5 des Getriebes und der achten Welle 8 des Getriebes angeordnet ist. Gemäß Figur 14 verbindet die Kupplung E im geschlossenen Zustand also Hohlrad H02 und Steg ST2 des zweiten Planetenradsatzes RS2 miteinander und blockiert diesen somit. Die in Figur 14 dargestellte räumliche Anordnung der Bauteile innerhalb des Getriebegehäuses GG ist weitgehend identisch zu Figur 12. Im Unterschied zu Figur 12 weist die Baugruppe der beiden Kupplungen D, F nunmehr axial nebeneinander angeordnete Lamellenpakete auf sowie einen gemeinsamen Lamellenträger, der nunmehr für beide Kupplungen D, F beispielhaft als Innenlamellenträger ausgebildet ist und als Abschnitt der Welle 8 mit dem Steg ST2 des zweiten Planetenradsatzes RS 2 verbunden ist.

Selbstverständlich wird der Fachmann sämtliche zuvor gegebenen Anregungen zur konstruktiven Ausgestaltung und räumlichen Anordnung der einzelnen Bauteile des Getriebes auf die in Figur 13 und 14 vereinfacht dargestellten Ausführungsbeispiele für ein erfindungsgemäßes 10-Gang-Automatgetriebe in sinnvoller Weise übertragen. Weitere Anregungen zu sinnvollen Modifikationsmöglichkeiten des erfindungsgemäßen Getriebekonzepts findet der Fachmann auch in der WO 2006/074707 A1.

### Bezugszeichen

- 1: erste Welle
- 2: zweite Welle
- 3: dritte Welle
- 4: vierte Welle
- 5: fünfte Welle
- 6: sechste Welle
- 7: siebte Welle
- 8: achte Welle

- A: erstes Schaltelement, erste Bremse
- A_a: Außenlamellenträger des ersten Schaltelementes
- A_i: Innenlamellenträger des ersten Schaltelementes
- A_l: Lamellenpaket des ersten Schaltelementes
- A_s: Servoeinrichtung des ersten Schaltelementes

- B: zweites Schaltelement, zweite Bremse
- B_a: Außenlamellenträger des zweiten Schaltelementes
- B_i: Innenlamellenträger des zweiten Schaltelementes
- B_l: Lamellenpaket des zweiten Schaltelementes
- B_s: Servoeinrichtung des zweiten Schaltelementes

- C: drittes Schaltelement, erste Kupplung
- C_a: Außenlamellenträger des dritten Schaltelementes
- C_i: Innenlamellenträger des dritten Schaltelementes
- C_l: Lamellenpaket des dritten Schaltelementes
- C_s: Servoeinrichtung des dritten Schaltelementes

- D: viertes Schaltelement, zweite Kupplung
- D_a: Außenlamellenträger des vierten Schaltelementes
- D_i: Innenlamellenträger des vierten Schaltelementes
- D_l: Lamellenpaket des vierten Schaltelementes
- D_s: Servoeinrichtung des vierten Schaltelementes

- E: fünftes Schaltelement, dritte Kupplung
- E_a: Außenlamellenträger des fünften Schaltelementes
- E_i: Innenlamellenträger des fünften Schaltelementes
- E_l: Lamellenpaket des fünften Schaltelementes
- E_s: Servoeinrichtung des fünften Schaltelementes

- F: sechstes Schaltelement, vierte Kupplung
- F_a: Außenlamellenträger des sechsten Schaltelementes
- F_i: Innenlamellenträger des sechsten Schaltelementes
- F_l: Lamellenpaket des sechsten Schaltelementes
- F_s: Servoeinrichtung des sechsten Schaltelementes

- AN: Antriebswelle
- AB: Abtriebswelle
- GG: Gehäuse
- GN: gehäusefeste Nabe
- GW: Gehäusewand

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzes

- RS2: zweiter Planetenradsatz
- H02: Hohlrad des zweiten Planetenradsatzes
- S02: Sonnenrad des zweiten Planetenradsatzes
- ST2: Steg des zweiten Planetenradsatzes
- PL2: Planetenräder des zweiten Planetenradsatzes

- RS3: dritter Planetenradsatz
- H03: Hohlrad des dritten Planetenradsatzes
- S03: Sonnenrad des dritten Planetenradsatzes
- ST3: Steg des dritten Planetenradsatzes
- PL3: Planetenräder des dritten Planetenradsatzes

- RS4: vierter Planetenradsatz
- H04: Hohlrad des vierten Planetenradsatzes
- S04: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

## Patentansprüche

1. Automatgetriebe in Planetenbauweise insbesondere für ein Kraftfahrzeug, mit einer Antriebswelle (AN), einer Abtriebswelle (AB), vier Planetenradsätze (RS1, RS2, RS3, RS4) sowie sechs Schaltelemente (A bis F), deren selektives Eingreifen verschiedene Übersetzungsverhältnisse zwischen Antriebswelle (AN) und Abtriebswelle (AB) bewirkt, sodass zehn Vorwärtsgänge und zumindest ein Rückwärtsgang realisierbar sind, wobei in jedem Gang genau drei der sechs Schaltelemente (A bis F) geschlossen sind und bei einem Wechsel von einem Gang in den nachfolgend höheren oder niedrigeren Gang jeweils nur eines der zuvor geschlossenen Schaltelemente geöffnet und ein zuvor offenes Schaltelement geschlossen wird,
**dadurch gekennzeichnet,**
**dass** die Abtriebswelle (AB) ständig mit einem Element (ST3) eines der vier Planetenradsätze (RS3) und ständig mit dem Ausgangselement eines der sechs Schaltelemente (D) verbunden ist und über dieses eine Schaltelement (D) mit dem Ausgangselement eines anderen der sechs Schaltelemente (F) verbindbar ist, wobei dieses andere ausgangsseitig mit der Abtriebswelle (AB) verbindbare Schaltelement (F) eingangseitig ständig mit einem anderen Element (H03) dieses ständig mit der Abtriebswelle (AB) verbundenen Planetenradsatzes (RS3) verbunden ist.

2. Automatgetriebe nach Anspruch 1, **dadurch gekennzeichnet, dass** das sechste Schaltelement (F) zur Realisierung eines getriebeseitigen Hillholders geeignet ist, durch den die Abtriebswelle (AB) mittels gleichzeitig geschlossener Schaltelemente getriebeseitig festsetzbar ist.

3. Automatgetriebe nach Anspruch 1 oder 2, **dadurch gekennzeichnet, dass**
■ der vierte Planetenradsatz (RS4) ständig mit der Antriebswelle (AN) verbunden ist, über je eine Wirkverbindung (3, 7) ständig mit dem ersten und zweiten Planetenradsatz (RS1, RS2) verbunden ist und über das erste Schaltelement (A) mit einem Gehäuse (GG) des Getriebes verbindbar ist,
■ der dritte Planetenradsatz (RS3) ständig mit der Abtriebswelle (AB) verbunden ist, über je eine Wirkverbindung (6, 5) ständig mit dem ersten und zweiten Planetenradsatz (RS1, RS2) verbunden ist, über das dritte Schaltelement (C) mit der Antriebswelle (AN) verbindbar ist und über das vierte Schaltelement (D) mit dem zweiten Planetenradsatz (RS2) verbindbar ist,
■ der zweite Planetenradsatz (RS2) über das fünfte Schaltelement (E) blockierbar ist und über das sechste Schaltelement (F) mit dem ersten und dritten Planetenradsatz (RS1, RS3) verbindbar ist,
■ der erste Planetenradsatz (RS1) über das erste Schaltelement (A) und über das zweite Schaltelement (B) mit dem Gehäuse (GG) verbindbar ist.

4. Automatgetriebe nach einem der Ansprüche 1 bis 3, **dadurch gekennzeichnet, dass**
■ das Getriebe acht drehbare Welle (1 bis 8) aufweist,
■ ein Steg (ST4) des vierten Planetenradsatzes (RS4) und die Antriebswelle (AN) verdrehfest miteinander verbunden sind und die erste Welle (1) bilden,
■ ein Steg (ST3) des dritten Planetenradsatzes (RS3) und die Abtriebswelle (AB) verdrehfest miteinander verbunden sind und die zweite Welle (2) bilden,
■ ein Sonnenrad (SO1) des ersten Planetenradsatzes (RS1) und ein Sonnenrad (S04) des vierten Planetenradsatzes (RS4) verdrehfest miteinander verbunden sind und die dritte Welle (3) bilden,
■ ein Hohlrad (HO1) des ersten Planetenradsatzes (RS1) die vierte Welle (4) bildet,
■ ein Hohlrad (HO2) des zweiten Planetenradsatzes (RS2) und ein Sonnenrad (SO3) des dritten Planetenradsatzes (RS3) verdrehfest miteinander verbunden sind und die fünfte Welle (5) bilden,
■ ein Steg (ST1) des ersten Planetenradsatzes (RS1) und ein Hohlrad (H03) des dritten Planetenradsatzes (RS3) verdrehfest miteinander verbunden sind und die sechste Welle (6) bilden,
■ ein Sonnenrad (S02) des zweiten Planetenradsatzes (RS2) und ein Hohlrad (H04) des vierten Planetenradsatzes (RS4) verdrehfest miteinander verbunden sind und die siebte Welle (7) bilden und
■ ein Steg (ST2) des zweiten Planetenradsatzes (RS2) die achte Welle (8) bildet,
wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der fünften Welle (5) und der ersten Welle (1) angeordnet ist,
■ das vierte Schaltelement (D) im Kraftfluss zwischen der achten Welle (8) und der zweiten Welle (2) angeordnet ist,
■ das fünfte Schaltelement (E) im Kraftfluss entweder zwischen der siebten Welle (7) und der fünften Welle (5), zwischen der siebten Welle (7) und der achten Welle (8) oder zwischen der fünften Welle (5) und der achten Welle (8) angeordnet ist, und
■ das sechste Schaltelement (F) im Kraftfluss zwischen der sechsten Welle (6) und der achten Welle (8) angeordnet ist.

5. Automatgetriebe nach einem der Ansprüche 1 bis 4, **dadurch gekennzeichnet, dass** sich
■ der erste Vorwärtsgang durch Schließen des ersten, zweiten und dritten Schaltelementes (A, B, C),
■ der zweite Vorwärtsgang durch Schließen des ersten, zweiten und fünften Schaltelementes (A, B, E),
■ der dritte Vorwärtsgang durch Schließen des zweiten, dritten und fünften Schaltelementes (B, C, E),
■ der vierte Vorwärtsgang durch Schließen des zweiten, vierten und fünften Schaltelementes (B, D, E),
■ der fünfte Vorwärtsgang durch Schließen des zweiten, dritten und vierten Schaltelementes (B, C, D),
■der sechste Vorwärtsgang durch Schließen des zweiten, dritten und sechsten Schaltelementes (B, C, F),
■der siebte Vorwärtsgang durch Schließen des dritten, fünften und sechsten Schaltelementes (C, E, F),
■ der achte Vorwärtsgang durch Schließen des ersten, dritten und sechsten Schaltelementes (A, C, F),
■ der neunte Vorwärtsgang durch Schließen des ersten, dritten und vierten Schaltelementes (A, C, D),
■ der zehnte Vorwärtsgang durch Schließen des ersten, vierten und fünften Schaltelementes (A, D, E) und
■ ein Rückwärtsgang durch Schließen des ersten, zweiten und vierten Schaltelementes (A, B, D) oder durch Schließen des ersten, zweiten und sechsten Schaltelementes (A, B, F)
ergibt.

6. Automatgetriebe nach einem der Ansprüche 1 bis 5, **dadurch gekennzeichnet, dass** die Abtriebswelle (AB) durch gleichzeitiges Schließen des ersten, zweiten vierten und sechsten Schaltelements (A, B, D, F) getriebeseitig festsetzbar ist.

7. Automatgetriebe nach einem der Ansprüche 1 bis 6, **dadurch gekennzeichnet, dass** alle vier Planetenradsätze (RS1, RS2, RS3, RS4) als Minus-Planetenradsätze ausgebildet sind.

8. Automatgetriebe nach einem der Ansprüche 1 bis 7, **dadurch gekennzeichnet, dass** die Planetenradsätze (RS1, RS2, RS3, RS4) koaxial zueinander und in axialer Richtung hintereinander in einer Reihenfolge "RS1, RS4, RS2, RS3" angeordnet sind.

9. Automatgetriebe nach Anspruch 8, **dadurch gekennzeichnet, dass** ein Lamellenpaket (F_l) des sechstes Schaltelementes (F) räumlich gesehen benachbart zum dritten Planetenradsatz (RS3) angeordnet ist.

10. Automatgetriebe nach Anspruch 8, **dadurch gekennzeichnet, dass** ein Lamellenpaket (F_l) des sechstes Schaltelementes (F) räumlich gesehen in einem Bereich radial über dem zweiten Planetenradsatz (RS2) angeordnet ist.

11. Automatgetriebe nach Anspruch 8, **dadurch gekennzeichnet, dass** ein Lamellenpaket (F_l) des sechstes Schaltelementes (F) räumlich gesehen in einem Bereich axial zwischen dem zweiten und vierten Planetenradsatz (RS2, RS4) angeordnet ist.

12. Automatgetriebe nach einem der Ansprüche 8 bis 11, **dadurch gekennzeichnet, dass** eine Servoeinrichtung (F_s) zum Betätigen des Lamellenpaketes (F_l) des sechsten Schaltelementes (F) räumlich gesehen zumindest teilweise in einem Bereich axial zwischen dem zweiten und vierten Planetenradsatz (RS2, RS4) angeordnet ist.

13. Automatgetriebe nach einem der Ansprüche 8 bis 11, **dadurch gekennzeichnet, dass** eine Servoeinrichtung (F_s) zum Betätigen des Lamellenpaketes (F_l) des sechsten Schaltelementes (F) räumlich gesehen zumindest teilweise in einem Bereich axial zwischen dem ersten und vierten Planetenradsatz (RS1, RS4) angeordnet ist.

14. Automatgetriebe nach einem der Ansprüche 8 bis 13, **dadurch gekennzeichnet, dass** das dritte, vierte und fünfte Schaltelement (C, D, E) räumlich gesehen in einem Bereich axial zwischen dem zweiten und dritten Planetenradsatz (RS2, RS3) angeordnet sind, wobei das fünfte Schaltelement (E) räumlich gesehen axial unmittelbar an den zweiten Planetenradsatz (RS2) angrenzt, das dritte Schaltelement (C) räumlich gesehen auf der dem zweiten Planetenradsatz (RS2) abgewandten Seite des fünften Schaltelements (E) axial unmittelbar an das fünfte Schaltelement (E) angrenzt, und das vierte Schaltelement (D) räumlich gesehen auf der dem fünften Schaltelement (E) abgewandten Seite des dritten Schaltelementes (C) axial unmittelbar an das dritte Schaltelement (C) angrenzt.

15. Automatgetriebe nach einem der Ansprüche 1 bis 7, **dadurch gekennzeichnet, dass** die Planetenradsätze (RS1, RS2, RS3, RS4) koaxial zueinander und in axialer Richtung hintereinander in einer Reihenfolge "RS2, RS4, RS1, RS3" angeordnet sind.

16. Automatgetriebe nach Anspruch 15, **dadurch gekennzeichnet, dass** das sechste Schaltelement (F) räumlich gesehen in einem Bereich axial zwischen dem ersten und dritten Planetenradsatz (RS1, RS3) angeordnet ist.

17. Automatgetriebe nach Anspruch 15 oder 16, **dadurch gekennzeichnet, dass** das sechste Schaltelement (F) räumlich gesehen benachbart zum ersten Planetenradsatz (RS1) angeordnet ist.

18. Automatgetriebe nach Anspruch 15,16 oder 17, **dadurch gekennzeichnet, dass** das vierte Schaltelement (D) räumlich gesehen auf der dem ersten Planetenradsatz (RS1) abgewandten Seite des sechstes Schaltelementes (F) angeordnet ist.

19. Automatgetriebe nach Anspruch 15, 16 oder 17, **dadurch gekennzeichnet, dass** ein Lamellenpaket (F_l) des sechstes Schaltelementes (F) räumlich gesehen zumindest teilweise radial über einem Lamellenpaket (D_l) des vierten Schaltelementes (D) angeordnet ist.

20. Automatgetriebe nach einem der Ansprüche 1 bis 19, **dadurch gekennzeichnet, dass** das erste und das zweite Schaltelement (A, B) räumlich gesehen benachbart zum ersten Planetenradsatz (RS1) angeordnet sind.

21. Automatgetriebe nach einem der Ansprüche 1 bis 20, **dadurch gekennzeichnet, dass** ein Anfahren des Kraftfahrzeugs mittels eines sowohl im ersten und zweiten Vorwärtsgang als auch im Rückwärtsgang Drehmoment übertragendes getriebeinternes Schaltelement erfolgt, wobei die Antriebswelle (AN) ständig verdrehfest oder drehelastisch mit einer Kurbelwelle eines Antriebs-Motors des Kraftfahrzeugs verbunden ist.

## Claims

1. Automatic transmission of planetary construction, in particular for a motor vehicle, comprising an input shaft (AN), an output shaft (AB), four planetary gear sets (RS1, RS2, RS3, RS4) and six shifting elements (A to F), selective engagement of which effects different transmission ratios between input shaft (AN) and output shaft (AB), so that ten forward gears and at least one reverse gear can be implemented, wherein in each gear exactly three of the six shifting elements (A to F) are closed and wherein, when shifting from a gear to the next higher or next lower gear, in each case only one of the previously closed shifting elements is opened and one previously open shifting element is closed, **characterised in that**
the output shaft (AB) is permanently connected to an element (ST3) of one of the four planetary gear sets (RS3) and is permanently connected to the output element of one of the six shifting elements (D), and is connectable via this one shifting element (D) to the output element of another of the six shifting elements (F), this other shifting element (F), which is connectable on the output side to the output shaft (AB), being permanently connected on the input side to another element (H03) of this planetary gear set (RS3) which is permanently connected to the output shaft (AB).

2. Automatic transmission according to Claim 1, **characterised in that** the sixth shifting element (F) is suitable for implementing a hill-hold function of the transmission by means of which the output shaft (AB) is lockable on the transmission side by means of simultaneously closed shifting elements.

3. Automatic transmission according to Claim 1 or 2, **characterised in that**
■ the fourth planetary gear set (RS4) is permanently connected to the input shaft (AN), is permanently connected via an operative connection (3, 7) in each case to the first and second planetary gear sets (RS1, RS2) and is connectable via the first shifting element (A) to a housing (GG) of the transmission,
■ the third planetary gear set (RS3) is permanently connected to the output shaft (AB), is permanently connected via an operative connection (6, 5) in each case to the first and second planetary gear sets (RS1, RS2), is connectable via the third shifting element (C) to the input shaft (AN) and is connectable via the fourth shifting element (D) to the second planetary gear set (RS2),
■ the second planetary gear set (RS2) is blockable via the fifth shifting element (E) and is connectable via the sixth shifting element (F) to the first and third planetary gear sets (RS1, RS3),
■ the first planetary gear set (RS1) is connectable via the first shifting element (A) and via the second shifting element (B) to the housing (GG).

4. Automatic transmission according to any one of Claims 1 to 3, **characterised in that**
■ the transmission comprises eight rotatable shafts (1 to 8),
■ a carrier (ST4) of the fourth planetary gear set (RS4) and the input shaft (AN) are connected non-rotatably to one another and form the first shaft (1),
■ a carrier (ST3) of the third planetary gear set (RS3) and the output shaft (AB) are connected non-rotatably to one another and form the second shaft (2),
■ a sun gear (SO1) of the first planetary gear set (RS1) and a sun gear (S04) of the fourth planetary gear set (RS4) are connected non-rotatably to one another and form the third shaft (3),
■ a ring gear (HO1) of the first planetary gear set (RS1) forms the fourth shaft (4),
■ a ring gear (HO2) of the second planetary gear set (RS2) and a sun gear (S03) of the third planetary gear set (RS3) are connected non-rotatably to one another and form the fifth shaft (5),
■ a carrier (ST1) of the first planetary gear set (RS1) and a ring gear (H03) of the third planetary gear set (RS3) are connected non-rotatably to one another and form the sixth shaft (6),
■ a sun gear (S02) of the second planetary gear set (RS2) and a ring gear (H04) of the fourth planetary gear set (RS4) are connected non-rotatably to one another and form the seventh shaft (7), and
■ a carrier (ST2) of the second planetary gear set (RS2) forms the eighth shaft (8),
wherein
■ the first shifting element (A) is arranged in the power flow between the third shaft (3) and a housing (GG) of the transmission,
■ the second shifting element (B) is arranged in the power flow between the fourth shaft (4) and the housing (GG) of the transmission,
■ the third shifting element (C) is arranged in the power flow between the fifth shaft (5) and the first shaft (1),
■ the fourth shifting element (D) is arranged in the power flow between the eighth shaft (8) and the second shaft (2),
■ the fifth shifting element (E) is arranged in the power flow either between the seventh shaft (7) and the fifth shaft (5), between the seventh shaft (7) and the eighth shaft (8) or between the fifth shaft (5) and the eighth shaft (8), and
■ the sixth shifting element (F) is arranged in the power flow between the sixth shaft (6) and the eighth shaft (8).

5. Automatic transmission according to any one of Claims 1 to 4, **characterised in that**
■ the first forward gear is produced by closing the first, second and third shifting elements (A, B, C),
■ the second forward gear is produced by closing the first, second and fifth shifting elements (A, B, E),
■ the third forward gear is produced by closing the second, third and fifth shifting elements (B, C, E),
■ the fourth forward gear is produced by closing the second, fourth and fifth shifting elements (B, D, E),
■ the fifth forward gear is produced by closing the second, third and fourth shifting elements (B, C, D),
■ the sixth forward gear is produced by closing the second, third and sixth shifting elements (B, C, F),
■ the seventh forward gear is produced by closing the third, fifth and sixth shifting elements (C, E, F),
■ the eighth forward gear is produced by closing the first, third and sixth shifting elements (A, C, F),
■ the ninth forward gear is produced by closing the first, third and fourth shifting elements (A, C, D),
■ the tenth forward gear is produced by closing the first, fourth and fifth shifting elements (A, D, E), and
■ a reverse gear is produced by closing the first, second and fourth shifting elements (A, B, D) or by closing the first, second and sixth shifting elements (A, B, F).

6. Automatic transmission according to any one of Claims 1 to 5, **characterised in that** the output shaft (AB) is lockable on the transmission side by simultaneously closing the first, second, fourth and sixth shifting elements (A, B, D, F).

7. Automatic transmission according to any one of Claims 1 to 6, **characterised in that** all four planetary gear sets (RS1, RS2, RS3, RS4) are in the form of minus planetary gear sets.

8. Automatic transmission according to any one of Claims 1 to 7, **characterised in that** the planetary gear sets (RS1, RS2, RS3, RS4) are arranged coaxially with one another and sequentially in the axial direction in a sequence "RS1, RS4, RS2, RS3".

9. Automatic transmission according to Claim 8, **characterised in that** a disc pack (F_l) of the sixth shifting element (F) is arranged spatially adjacent to the third planetary gear set (RS3).

10. Automatic transmission according to Claim 8, **characterised in that** a disc pack (F_I) of the sixth shifting element (F) is arranged spatially in a region located radially above the second planetary gear set (RS2).

11. Automatic transmission according to Claim 8, **characterised in that** a disc pack (F_I) of the sixth shifting element (F) is arranged spatially in a region located axially between the second and fourth planetary gear sets (RS2, RS4).

12. Automatic transmission according to any one of Claims 8 to 11, **characterised in that** a servo device (F_s) for actuating the disc pack (F_I) of the sixth shifting element (F) is arranged spatially at least partially in a region located axially between the second and fourth planetary gear sets (RS2, RS4).

13. Automatic transmission according to any one of Claims 8 to 11, **characterised in that** a servo device (F_s) for actuating the disc pack (F_I) of the sixth shifting element (F) is arranged spatially at least partially in a region located axially between the first and fourth planetary gear sets (RS1, RS4).

14. Automatic transmission according to any one of Claims 8 to 13, **characterised in that** the third, fourth and fifth shifting elements (C, D, E) are arranged spatially in a region located axially between the second and third planetary gear set (RS2, RS3), the fifth shifting element (E) being located spatially directly adjacent axially to the second planetary gear set (RS2), the third shifting element (C) being located spatially directly adjacent axially to the fifth shifting element (E) on the side of the fifth shifting element (E) facing away from the second planetary gear set (RS2), and the fourth shifting element (D) being located spatially directly adjacent axially to the third shifting element (C) on the side of the third shifting element (C) facing away from the fifth shifting element (E).

15. Automatic transmission according to any one of Claims 1 to 7, **characterised in that** the planetary gear sets (RS1, RS2, RS3, RS4) are arranged coaxially with one another and sequentially in the axial direction in a sequence "RS2, RS4, RS1, RS3".

16. Automatic transmission according to Claim 15, **characterised in that** the sixth shifting element (F) is arranged spatially in a region located axially between the first and third planetary gear sets (RS1, RS3).

17. Automatic transmission according to Claim 15 or 16, **characterised in that** the sixth shifting element (F) is arranged spatially adjacent to the first planetary gear set (RS1).

18. Automatic transmission according to Claim 15, 16 or 17, **characterised in that** the fourth shifting element (D) is arranged spatially on the side of the sixth shifting element (F) facing away from the first planetary gear set (RS1) .

19. Automatic transmission according to Claim 15, 16 or 17, **characterised in that** a disc pack (F_I) of the sixth shifting element (F) is arranged spatially at least partially radially above a disc pack (D_I) of the fourth shifting element (D).

20. Automatic transmission according to any one of Claims 1 to 19, **characterised in that** the first and the second shifting elements (A, B) are arranged spatially adjacent to the first planetary gear set (RS1).

21. Automatic transmission according to any one of Claims 1 to 20, **characterised in that** a start of the motor vehicle is effected by means of a shifting element internal to the transmission which transmits torque in both the first and second forward gears and in the reverse gear, the input shaft (AN) being connected permanently in a non-rotatable or torsionally elastic manner to a crankshaft of a drive engine of the motor vehicle.

## Revendications

1. Transmission automatique de construction de type planétaire, notamment pour un véhicule automobile, avec un arbre d'entraînement en entrée (AN), un arbre d'entraînement en sortie (AB), quatre essieux planétaires (RS1, RS2, RS3, RS4) ainsi que six éléments de changement de vitesse (A à F), dont l'engrenage sélectif provoque la mise en place de différents rapports de démultiplication entre l'arbre d'entraînement en entrée (AN) et l'arbre d'entraînement en sortie (AB), de sorte que dix vitesses avant et au moins une vitesse arrière sont réalisables, trois des six éléments de changement de vitesse (A à F) étant précisément fermés dans chaque vitesse et respectivement seul un des éléments de changement de vitesse précédemment fermé étant ouvert et un élément de changement de vitesse précédemment ouvert étant fermé en cas de passage d'une vitesse dans la vitesse suivante supérieure ou inférieure, **caractérisée en ce que** l'arbre d'entraînement en sortie (AB) est en permanence relié à un élément (ST3) d'un des quatre essieux planétaires (RS3) et est en permanence relié à l'élément de sortie d'un des six éléments de changement de vitesse (D) et peut être relié à l'élément de sortie d'un autre des six éléments de changement de vitesse (F) par l'intermédiaire de cet élément de changement de vitesse (D), cet autre élément de changement de vitesse (F) pouvant être relié du côté de sortie à l'arbre d'entraînement en sortie (AB) étant en permanence relié du côté d'entrée à un autre élément (H03) de cet essieu planétaire (RS3) en permanence relié à l'arbre d'entraînement en sortie (AB).

2. Transmission automatique selon la revendication 1, **caractérisée en ce que** le sixième élément de changement de vitesse (F) est adapté pour réaliser un système d'aide de démarrage en côté placé du côté de la transmission permettant d'ancrer l'arbre d'entraînement en sortie (AB) du côté de la transmission à l'aide d'éléments de changement de vitesse simultanément fermés.

3. Transmission automatique selon la revendication 1 ou 2, **caractérisée en ce que** :
- le quatrième essieu planétaire (RS4) est en permanence relié à l'arbre d'entraînement en entrée (AN) par l'intermédiaire respectivement d'une liaison active (3, 7) en permanence reliée au premier et au deuxième essieu planétaire (RS1, RS2) et peut être relié à un carter (GG) de la transmission par l'intermédiaire du premier élément de changement de vitesse (A) ;
- le troisième essieu planétaire (RS3) est en permanence relié à l'arbre d'entraînement en sortie (AB) par l'intermédiaire respectivement d'une liaison active (6, 5) en permanence reliée au premier et au deuxième essieu planétaire (RS1, RS2), il peut être relié à l'arbre d'entraînement en entrée (AN) par l'intermédiaire du troisième élément de changement de vitesse (C) et peut être relié au deuxième essieu planétaire (RS2) par l'intermédiaire du quatrième élément de changement de vitesse (D) ;
- le deuxième essieu planétaire (RS2) peut être bloqué par l'intermédiaire du cinquième élément de changement de vitesse (E) et peut être relié au premier et au troisième essieu planétaire (RS1, RS3) par l'intermédiaire du sixième élément de changement de vitesse (F) ;
- le premier essieu planétaire (RS1) peut être relié au carter (GG) par l'intermédiaire du premier élément de changement de vitesse (A) et par l'intermédiaire du deuxième élément de changement de vitesse (B).

4. Transmission automatique selon l'une quelconque des revendications 1 à 3, **caractérisée en ce que** :
- la transmission comporte huit arbres (1 à 8) pouvant pivoter ;
- un étai (ST4) du quatrième essieu planétaire (RS4) et l'arbre d'entraînement en entrée (AN) sont reliés l'un à l'autre fixement sans torsion et forment le premier arbre (1) ;
- un étai (ST3) du troisième essieu planétaire (RS3) et l'arbre d'entraînement en sortie (AB) sont reliés l'un à l'autre fixement sans torsion et forment le deuxième arbre (2) ;
- un pignon solaire (SO1) du premier essieu planétaire (RS1) et un pignon solaire (SO4) du quatrième essieu planétaire (RS4) sont reliés l'un à l'autre fixement sans torsion et forment le troisième arbre (3) ;
- une roue creuse (HO1) du premier essieu planétaire (RS1) forme le quatrième arbre (4) ;
- une roue creuse (H02) du deuxième essieu planétaire (RS2) et un pignon solaire (SO3) du troisième essieu planétaire (RS3) sont reliés l'un à l'autre fixement sans torsion et forment le cinquième arbre (5) ;
- un étai (ST1) du premier essieu planétaire (RS1) et une roue creuse (H03) du troisième essieu planétaire (RS3) sont reliés l'un à l'autre fixement sans torsion et forment le sixième arbre (6) ;
- un pignon solaire (SO2) du deuxième essieu planétaire (RS2) et une roue creuse (H04) du quatrième essieu planétaire (RS4) sont reliés l'un à l'autre fixement sans torsion et forment le septième arbre (7) ; et
- un étai (ST2) du deuxième essieu planétaire (RS2) forme le huitième arbre (8) ;
où :
- le premier élément de changement de vitesse (A) est disposé dans le flux de force prévu entre le troisième arbre (3) et un carter (GG) de la transmission ;
- le deuxième élément de changement de vitesse (B) est disposé dans le flux de force prévu entre le quatrième arbre (4) et le carter (GG) de la transmission ;
- le troisième élément de changement de vitesse (C) est disposé dans le flux de force prévu entre le cinquième arbre (5) et le premier arbre (1) ;
- le quatrième élément de changement de vitesse (D) est disposé dans le flux de force prévu entre le huitième arbre (8) et le deuxième arbre (2) ;
- le cinquième élément de changement de vitesse (E) est disposé dans le flux de force prévu soit entre le septième arbre (7) et le cinquième arbre (5), entre le septième arbre (7) et le huitième arbre (8), soit entre le cinquième arbre (5) et le huitième arbre (8) ; et
- le sixième élément de changement de vitesse (F) est disposé dans le flux de force prévu entre le sixième arbre (6) et le huitième arbre (8).

5. Transmission automatique selon l'une quelconque des revendications 1 à 4, **caractérisée en ce que** :
- la première vitesse avant est obtenue en fermant le premier, deuxième et troisième élément de changement de vitesse (A, B, C) ;
- la deuxième vitesse avant est obtenue en fermant le premier, deuxième et cinquième élément de changement de vitesse (A, B, E) ;
- la troisième vitesse avant est obtenue en fermant le deuxième, troisième et cinquième élément de changement de vitesse (B, C, E) ;
- la quatrième vitesse avant est obtenue en fermant le deuxième, quatrième et cinquième élément de changement de vitesse (B, D, E) ;
- la cinquième vitesse avant est obtenue en fermant le deuxième, troisième et quatrième élément de changement de vitesse (B, C, D) ;
- la sixième vitesse avant est obtenue en fermant le deuxième, troisième et sixième élément de changement de vitesse (B, C, F) ;
- la septième vitesse avant est obtenue en fermant le troisième, cinquième et sixième élément de changement de vitesse (C, E, F) ;
- la huitième vitesse avant est obtenue en fermant le premier, troisième et sixième élément de changement de vitesse (A, C, F) ;
- la neuvième vitesse avant est obtenue en fermant le premier, troisième et quatrième élément de changement de vitesse (A, C, D) ;
- la dixième vitesse avant est obtenue en fermant le premier, quatrième et cinquième élément de changement de vitesse (A, D, E) ; et
- une vitesse arrière est obtenue en fermant le premier, deuxième et quatrième élément de changement de vitesse (A, B, D) ou en fermant le premier, deuxième et sixième élément de changement de vitesse (A, B, F).

6. Transmission automatique selon l'une quelconque des revendications 1 à 5, **caractérisée en ce que** l'arbre d'entraînement en sortie (AB) peut être ancré du côté de la transmission par fermeture simultanée du premier, deuxième, quatrième et sixième élément de changement de vitesse (A, B, D, F).

7. Transmission automatique selon l'une quelconque des revendications 1 à 6, **caractérisée en ce que** les quatre essieux planétaires (RS1, RS2, RS3, RS4) prennent la forme d'essieux planétaires négatifs.

8. Transmission automatique selon l'une quelconque des revendications 1 à 7, **caractérisée en ce que** les essieux planétaires (RS1, RS2, RS3, RS4) sont disposés ensemble dans le plan coaxial et les uns derrière les autres dans la direction axiale selon une séquence « RS1, RS4, RS2, RS3 ».

9. Transmission automatique selon la revendication 8, **caractérisée en ce qu'**un paquet de lamelles (F_I) du sixième élément de changement de vitesse (F) est disposé, quand il est vu dans l'espace, à proximité du troisième essieu planétaire (RS3).

10. Transmission automatique selon la revendication 8, **caractérisée en ce qu'**un paquet de lamelles (F_I) du sixième élément de changement de vitesse (F) est disposé, quand il est vu dans l'espace, dans une zone située dans le plan radial au-dessus du deuxième essieu planétaire (RS2).

11. Transmission automatique selon la revendication 8, **caractérisée en ce qu'**un paquet de lamelles (F_I) du sixième élément de changement de vitesse (F) est disposé, quand il est vu dans l'espace, dans une zone située dans le plan axial entre le deuxième et le quatrième essieu planétaire (RS2, RS4).

12. Transmission automatique selon l'une quelconque des revendications 8 à 11, **caractérisée en ce qu'**un dispositif servomoteur (F_s) servant à actionner le paquet de lamelles (F_I) du sixième élément de changement de vitesse (F) est disposé, quand il est vu dans l'espace, au moins en partie dans une zone située dans le plan axial entre le deuxième et le quatrième essieu planétaire (RS2, RS4).

13. Transmission automatique selon l'une quelconque des revendications 8 à 11, **caractérisée en ce qu'**un dispositif servomoteur (F_s) servant à actionner le paquet de lamelles (F_I) du sixième élément de changement de vitesse (F) est disposé, quand il est vu dans l'espace, au moins en partie dans une zone située dans le plan axial entre le premier et le quatrième essieu planétaire (RS1, RS4).

14. Transmission automatique selon l'une quelconque des revendications 8 à 13, **caractérisée en ce que** le troisième, le quatrième et le cinquième élément de changement de vitesse (C, D, E) sont disposés, quand ils sont vus dans l'espace, dans une zone située dans le plan axial entre le deuxième et le troisième essieu planétaire (RS2, RS3), le cinquième élément de changement de vitesse (E) étant placé de façon directement connexe dans le plan axial, quand il est vu dans l'espace, contre le deuxième essieu planétaire (RS2), le troisième élément de changement de vitesse (C) étant placé de façon directement connexe dans le plan axial, quand il est vu dans l'espace sur le côté du cinquième élément de changement de vitesse (E) opposé au deuxième essieu planétaire (RS2), contre le cinquième élément de changement de vitesse (E) et le quatrième élément de changement de vitesse (D) étant placé de façon directement connexe dans le plan axial, quand il est vu dans l'espace sur le côté du troisième élément de changement de vitesse (C) opposé au cinquième élément de changement de vitesse (E), contre le troisième élément de changement de vitesse (C).

15. Transmission automatique selon l'une quelconque des revendications 1 à 7, **caractérisée en ce que** les essieux planétaires (RS1, RS2, RS3, RS4) sont disposés ensemble dans le plan coaxial et les uns derrière les autres dans la direction axiale selon la séquence « RS2, RS4, RS1, RS3 ».

16. Transmission automatique selon la revendication 15, **caractérisée en ce que** le sixième élément de changement de vitesse (F) est disposé, quand il est vu dans l'espace, dans une zone située dans le plan axial entre le premier et le troisième essieu planétaire (RS1, RS3).

17. Transmission automatique selon la revendication 15 ou 16, **caractérisée en ce que** le sixième élément de changement de vitesse (F) est disposé, quand il est vu dans l'espace, à proximité du premier essieu planétaire (RS1).

18. Transmission automatique selon la revendication 15, 16 ou 17, **caractérisée en ce que** le quatrième élément de changement de vitesse (D) est disposé, quand il est vu dans l'espace, sur le côté du sixième élément de changement de vitesse (F) opposé au premier essieu planétaire (RS1).

19. Transmission automatique selon la revendication 15, 16 ou 17, **caractérisée en ce qu'**un paquet de lamelles (F_I) du sixième élément de changement de vitesse (F) est disposé, quand il est vu dans l'espace, au moins en partie dans le plan radial au-dessus du paquet de lamelles (D_I) du quatrième élément de changement de vitesse (D).

20. Transmission automatique selon l'une quelconque des revendications 1 à 19, **caractérisée en ce que** le premier et le deuxième élément de changement de vitesse (A, B) sont disposés, quand ils sont vus dans l'espace, à proximité du premier essieu planétaire (RS1).

21. Transmission automatique selon l'une quelconque des revendications 1 à 20, **caractérisée en ce qu'**un démarrage du véhicule automobile se produit à l'aide d'un élément de changement de vitesse entraîné en interne transmettant un couple de rotation tant dans la première et la deuxième vitesse avant que dans la vitesse arrière, l'arbre d'entraînement en entrée (AN) étant en permanence relié fixement sans torsion ou élastiquement en rotation à un arbre de vilebrequin du moteur d'entraînement en entrée de véhicule automobile.
